(19) Europäisches Patentamt
European Patent Office
Office européen des brevets

(11) Veröffentlichungsnummer: **0 168 751**
**B1**

(12) # EUROPÄISCHE PATENTSCHRIFT

(45) Veröffentlichungstag der Patentschrift: **08.02.89**

(51) Int. Cl.[4]: **C 09 B 62/503**, D 06 P 3/66, D 06 P 3/10

(21) Anmeldenummer: **85108476.4**

(22) Anmeldetag: **09.07.85**

(54) **Wasserlösliche Triphendioxazin-Verbindungen, Verfahren zu ihrer Herstellung und ihre Verwendung als Farbstoffe.**

(30) Priorität: **20.07.84 DE 3426727**

(43) Veröffentlichungstag der Anmeldung: **22.01.86 Patentblatt 86/4**

(45) Bekanntmachung des Hinweises auf die Patenterteilung: **08.02.89 Patentblatt 89/6**

(84) Benannte Vertragsstaaten: **CH DE FR GB IT LI**

(56) Entgegenhaltungen:
**EP-A- 0 141 996**
**EP-A- 0 153 599**
**FR-A- 2 360 643**
**FR-A- 2 397 443**
**GB-A- 2 059 985**

(73) Patentinhaber: **HOECHST AKTIENGESELLSCHAFT, Postfach 80 03 20, D-6230 Frankfurt am Main 80 (DE)**

(72) Erfinder: **Fuchs, Hermann, Dr., Altenhainer Strasse 2, D-6240 Königstein/Taunus (DE)**
Erfinder: **Springer, Hartmut, Dr., Am Erdbeerstein 27, D-6240 Königstein/Taunus (DE)**
Erfinder: **Schwaiger, Günther, Dr., Johannesallee 41, D-6230 Frankfurt am Main 80 (DE)**

**EP 0 168 751 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung liegt auf dem Gebiet der faserreaktiven Farbstoffe.

Es wurden Triphendioxazin-Verbindungen entsprechend der allgemeinen Formel (1)

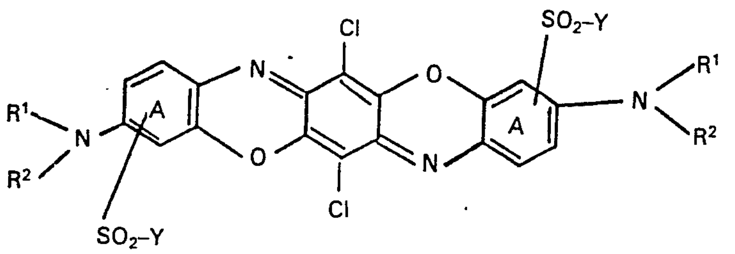

(1)

gefunden, die wertvolle faserreaktive Farbstoffeigenschaften besitzen.

In dieser Formel (1) bedeuten:

$R^1$ ist ein Wasserstoffatom oder eine Alkylgruppe von 1 bis 8 C-Atomen, bevorzugt von 1 bis 6 C-Atomen, insbesondere von 1 bis 4 C-Atomen, die – ausgenommen durch eine Hydroxygruppe – substituiert sein kann, oder ist eine Cycloalkylgruppe von 5 bis 8 C-Atomen, wie die Cyclopentyl- oder Cyclohexylgruppe, mit gegebenenfalls 1 bis 3 Methylgruppen und/oder einer Aminogruppe, Alkanoylaminogruppe von 2 bis 5 C-Atomen oder Benzoylaminogruppe als Substituenten oder ist der Phenylrest, der durch 1, 2 oder 3, vorzugsweise 1 oder 2, Substituenten aus der Gruppe Sulfo (entsprechend der allgemeinen Formel $-SO_3M$ mit M der nachstehend angegebenen Bedeutung), Carboxy (entsprechend der allgemeinen Formel $-COOM$ mit M der nachstehend angegbenen Bedeutung), Halogen, wie Brom und insbesondere Chlor, Alkyl von 1 bis 4 C-Atomen, wie Methyl und Ethyl, Alkoxy von 1 bis 4 C-Atomen, wie Methoxy und Ethoxy, Nitro, eine Gruppe der Formel $-SO_2-Y'$ mit Y' der nachstehend angegebenen Bedeutung, Alkylamino mit einem Alkyrest von 1 bis 4 C-Atomen, Dialkylamino mit Alkylresten von jeweils 1 bis 4 C-Atomen, Alkanoylamino von 2 bis 5 C-Atomen, wie Acetylamino, und Benzoylamino, substituiert sein kann, oder ist ein Naphthylrest, der durch 1, 2 oder 3 Sulfogruppen und/oder eine Gruppe der Formel $-SO_2-Y'$ substituiert sein kann,

$R^2$ besitzt eine der für R' angegebenen Bedeutungen, wobei $R^2$ zu $R^1$ gleich oder von $R^1$ verschieden ist, oder

$R^1$ und $R^2$ bilden zusammen mit dem Stickstoffatom und einem, zwei oder drei Alkylenresten von 1 bis 5 C-Atomen und gegebenenfalls einem oder zwei weiteren Heteroatomen, wie Stickstoff-, Sauerstoff- oder Schwefelatomen, einen 5- bis 8-gliedrigen heterocyclischen Rest, wie beispielsweise den Piperidino-, Piperazino- oder Morpholinorest,

wobei die beiden Gruppen $-NR^1R^2$ zueinander gleiche oder voneinader verschiedene Beteutungen besitzen können;

die beiden Benzolkerne A können durch 1 oder 2 Substituenten, bevorzugt 1 Substituenten, aus der Gruppe Alkyl von 1 bis 6 C-Atomen, bevorzugt von 1 bis 4 C-Atomen, wie insbesondere hiervon Methyl und Ethyl, Alkoxy von 1 bis 5 C-Atomen, bevorzugt von 1 bis 4 C-Atomen, wie insbesondere hiervon Methoxy und Ethoxy, Halogen, wie Fluor und Brom und insbesondere Chlor, Carboxy und Sulfo substituiert sein,

wobei die Substitution in beiden Benzolkernen A zueinander gleich oder voneinander verschieden sein kann, bevorzugt zueinander gleich ist;

die Gruppe $-SO_2-Y$ steht bevorzugt in ortho-Stellung zur Aminogruppe $-NR^1R^2$ gebunden, und beide können voneinander verschiedene oder bevorzugt zueinander gleiche Bedeutungen besitzen;

Y ist die Vinylgruppe oder eine Ethylgruppe, die in β-Stellung einen durch ein Alkali eliminierbaren Substituenten enthält, insbesondere eine β-Sulfatoethyl-Gruppe;

Y' ist die Vinylgruppe oder eine in β-Stellung durch einen durch ein Alkali eliminierbaren Substituenten substituierte Ethylgruppe;

M ist ein Wasserstoffatom oder ein Alkalimetallatom, wie Natrium, Kalium und Lithium, oder das Äquivalent eines Erdalkalimetalls, wie beispielsweise des Calciums;

von den Sulfo- und Sulfatogruppen, die im Molekül (1) enthalten sein können, enthält das Molekül (1) zwingend mindestens eine, bevorzugt mindestens zwei davon,

wobei hiervon solche Triphendioxazin-Verbindungen ausgenommen sind, die der allgemeinen Formel (A)

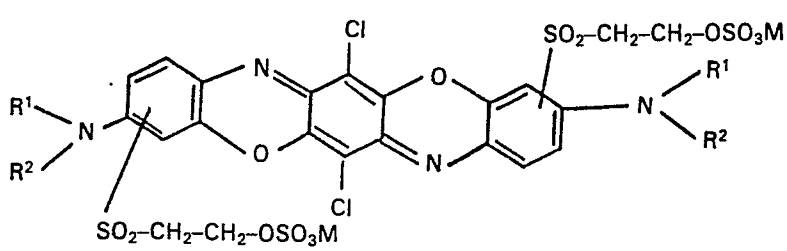

(A)

entsprechen, in welcher

beide $R^2$ β-Sulfo-ethyl, δ-Sulfo-butyl, 3,5-Disulfophenyl, 3,5-Disulfo-4-amino-phenyl, β-(3-Sulfo-phenoxy)-ethyl, β-(4-Sulfo-phenylamino)-ethyl, β-(Sulfoacetylamino)-ethyl, β-(2-Nitro-4-sulfo-phenyl-amino)-ethyl, 4-Sulfo-phenethyl, Sulfobenzyl, β-(N-Sulfoamino)-ethyl, Carboxymethyl, eine Gruppe der Formel $-(CH_2)_4-SO_2-NH-SO_2-CH_3$, β-Sulfato-ethyl, γ-Sulfatopropyl, γ-Sulfato-butyl, β-Sulfato-propyl, δ-Sulfatobutyl, β-(β'-Sulfato-ethoxy)-ethyl, β-(β'-Sulfatoethylsulfonyl)-ethyl, β-(β'-Sulfatoethylamino)-ethyl, β-Sulfato-α, α-dimethylethyl, β, γ-Disulfato-propyl, α, α-Di-(sulfatomethyl)ethyl oder ω-Sulfato-hexyl bedeuten, falls $R^1$ für ein Wasserstoffatom steht, und beide $R^2$ β-Sulfoethyl, β-Sulfato-ethyl oder γ-Sulfato-propyl sind, falls $R^1$für die Methylgruppe steht, und M ein Wasserstoffatom oder ein Alkalimetall bedeutet.

Faserreaktive Triphendioxazin-Verbindungen der hier ausgeschlossenen Art sind bereits in den älteren, nicht vorveröffentlichen europäischen Patentanmeldungs-Veröffentlichungen EP-A-0 141 996 und EP-A- 0 153 599, die unter Art. 54(3) EPÜ fallen, beschrieben.

Substituenten, die gemäss dem Formelglied Y oder Y' in β-Stellung der Ethylgruppe gebunden sind und durch ein Alkali unter Bildung der Vinylgruppe eliminert werden können, sind beispielsweise Alkanoyloxygruppen von 2 bis 5 C-Atomen, wie die Acetyloxygruppe, Aroyloxygruppen, wie die Benzoyloxy-, Sulfobenzoyloxy- oder Carboxybenzoyloxy-Gruppe, Dialkylaminogruppen mit Alkylresten von 1 bis 4 C-Atomen, wie insbesondere die Dimethylamino- und Diethylaminogruppe, das Chloratom, das Bromatom, Alkylsulfonyloxygruppen mit Alkylresten von 1 bis 4 C-Atomen, eine Phosphatogruppe (entsprechend der allgemeinen Formel $-OPO_3M_2$ mit M der obengenannten Bedeutung) eine Thiosulfatogruppe (entsprechend der allgemeinen Formel $-S-SO_3M$ mit M der obengenannten Bedeutung) oder eine Sulfatogruppe (entsprechend der allgemeinen Formel $-OSO_3M$ mit M der obengenannten Bedeutung). Bevorzugt sind von den Gruppen entsprechend dem Formelglied Y die β-Chlorethyl-, β-Phosphatoethyl- und β-Thiosulfatoethyl-Gruppe und insbesondere die Vinylgruppe und ganz besonders bevorzugt die β-Sulfatoethyl-Gruppe.

Das Formelglied Y' ist bevorzugt die β-Phosphatoethyl-, Vinyl- und β-Sulfatoethylgruppe. Die Reste Y und Y' können zueinander gleiche oder voneinander verschiedene Bedeutungen haben.

Die für $R^1$ und $R^2$ stehenden Alkylgruppen können substiuiert sein, wie beispielsweise durch einen oder zwei Substituenten aus der Menge der Substituenten Halogen, wie Brom und insbesondere Chlor, Sulfato, Phosphato, Sulfo, Carboxy, Carbalkoxy von 2 bis 5 C-Atomen, wie Carbomethoxy und Carbethoxy, Alkanoylamino von 2 bis 5 C-Atomen, wie Acetylamino, Alkylamino mit 1 bis 4 C-Atomen im Alkylrest, wie Methylamino und Ethylamino. Dialkylamino mit 1 bis 4 C-Atomen in den Alkylresten, wie Dimethylamino und Diethylamino, ein in den Alkylresten durch eine Sulfo-, Carboxy-, Sulfato- oder Phosphatogruppe oder eine Alkoxygruppe von 1 bis 4 C-Atomen oder eine β-Sulfatoethoxy- oder β-Sulfato-di-, -tri- oder -tetraglykolether-Gruppe substituiertes Alkylamino oder Dialkylamino mit jeweils 1 bis 4 C-Atomen in den Alkylresten des Mono- bzw. Dialkylamins, eine Gruppe der Formel $-SO_2-Y'$ mit Y' der oben angegebenen Bedeutung, Phenyl und Phenyl, das durch Substituenten aus der Gruppe Alkyl von 1 bis 4 C-Atomen, Alkoxy von 1 bis 4 C-Atomen, Halogen, wie Brom und insbesondere Chlor, Nitro. Sulfo, Carboxy, eine Gruppe der Formel $-SO_2-Y'$ mit Y' der oben angegebenen Bedeutung, Amino, Alkylamino mit einem Akylrest von 1 bis 4 C-Atomen, Alkanoylamino von 2 bis 5 C-Atomen, wie Acetylamino, Benzoylamino, Sulfobenzoylamino und/oder Carbalkoxy von 2 bis 5 C-Atomen substituiert ist. Phenylsubstituierte Alkylgruppen sind bevorzugt die Benzyl- und die Phenethylgruppe.

Die beiden Formelreste $-NR^1 R^2$ haben bevorzugt die gleiche Bedeutung.

Sofern die Benzolkerne A durch einen der obengenannten zusätzlichen Substituenten substituiert sind, steht dieser in ortho-Stellung, bevorzugt in meta- oder para-Stellung zur Gruppe $-SO_2-Y$ gebunden ist. Bevorzugt sind die Benzolkerne A jedoch nicht durch einen oder zwei weitere Substituenten substituiert.

Von den Resten $R^1$ und $R^2$ sind insbesondere diejenigen bevorzugt, die ein Wasserstoffatom oder eine Alkylgruppe von 1 bis 4 C-Atomen darstellen, die durch eine Sulfogruppe, eine Carboxygruppe oder eine Sulfatogruppe substiutiert sein können oder durch eine Monosulfophenyl- oder Disulfophenylgruppe substituiert sind. Insbesondere bevorzugt ist $R^2$ ein β-(Monosulfophenyl- oder -disulfophenyl)-ethyl- oder -methyl-Gruppe oder eine β-Sulfatopropyl-Gruppe oder eine γ-Sulfato-propyl-, eine β-Sulfatoethyl-, eine β, γ-Disulfatopropyl-, eine β-Sulfato-isopropyl-, eine α-Sulfatomethyl-propyl-, eine β-(β'-Sulfatoethoxy)-ethyl- oder eine β-Sulfo-ethyl-Gruppe. Bevorzugt ist die β-Sulfato-ethyl-Gruppe. Bevorzugt sind auch Verbindungen der Formel (1), in welcher jedes $R^1$ ein Wasserstoffatom ist.

Besonders hervorzuheben sind von den erfindungsgemässen Triphendioxazin-Verbindungen diejenigen, die der allgemeinen Formel (2a)

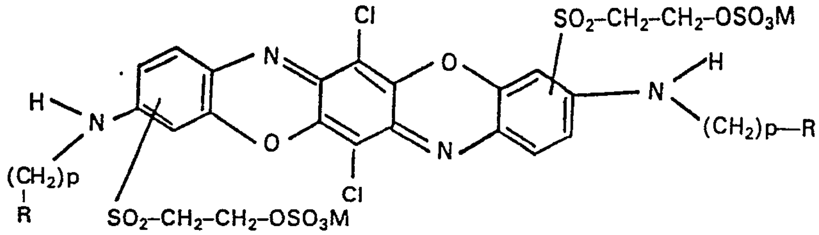

(2a)

entsprechen, in welcher M ein Wasserstoffatom oder bevorzugt ein Alkalimetallatom, wie insbesondere Natrium, ist, p für die Zahl 3 steht und R eine Sulfogruppe ist oder der Formelrest $-(CH_2)_p-R$ die β-Sulfato-α-ethyl-ethyl-, die β-(2,4-Disulfophenyl)-ethyl- oder eine Disulfobenzyl-Gruppe ist.

Die neuen Dioxazinverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinen Sinne und einschliesslich des Bedruckens verstanden) von hydroxy- und/oder carbonamidgruppenhaltigen Materialien, insbesondere Fasermaterialien.

Die vorliegende Erfindung betrifft weiterhin Verfahren zur Herstellung der obengenannten und definierten Verbindungen der allgemeinen Formel (1). Diese sind dadurch gekennzeichnet, dass man eine Aminoverbindung der allgemeinen Formel (3)

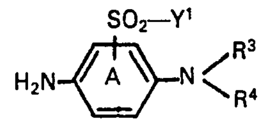

(3)

in welcher $Y^1$ die für Y genannte Bedeutung besitzt oder bevorzugt die β-Hydroxyethyl-Gruppe ist, $R^3$ und $R^4$, zueinander gleich oder voneinander verschieden, eine der Bedeutungen von $R^1$ bzw. $R^2$ besitzen oder eine durch eine Hydroxygruppe substituierte Alkylgruppe von 1 bis 8 C-Atomen bedeuten, wobei die in $R^3$ und/oder $R^4$ gegebenenfalls befindliche Gruppe Y' in der Gruppe $-SO_2-Y'$ hier auch eine β-Hydroxyethyl-Gruppe sein kann, und A die obengenannte Bedeutung hat, der Benzolkern A jedoch in einer der ortho-Stellungen zur angegebenen primären Aminogruppe zwingend nicht substituiert sein darf, in zweifach molarer Menge in an und für sich üblicher und zur Synthese von Triphendioxazin-Verbindungen bekannten Verfahrensweisen mit 2,3,5,6-Tetrachlor-1,4-benzochinon (Chloranil) zunächst zu einem Anil-Zwischenprodukt der angenommenen allgemeinen Formel (5)

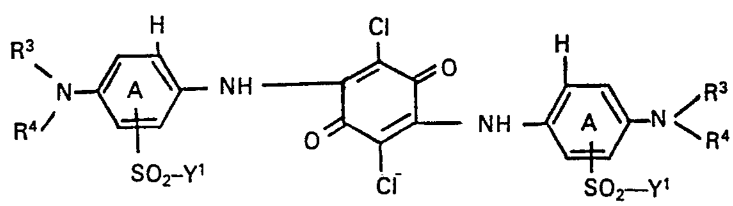

(5)

in welcher A, $R^3$, $R^4$ und $Y^1$ die obengenannten Bedeutungen haben, umsetzt und dieses, gegebenenfalls nach Zwischenisolierung, in Gegenwart eines Oxidationsmittels und in Schwefelsäure oder Schwefeltrioxid enthaltender Schwefelsäure als Medium zum Triphendioxazin cyclisiert, wobei man vor oder gleichzeitig mit der Cyclisierung gegebenenfalls vorhandene β-Hydroxyethyl-Gruppen und gegebenenfalls vorhandene weitere Hydroxyalkylgruppen, wie beispielsweise die β-Hydroxyethyl-Gruppen der Formelreste $Y^1$, in die entsprechenden β-Sulfatoethyl-Gruppen der Formelreste $Y^1$, in die entsprechenden β-Sulfatoethyl-Gruppen und gegebenenfalls Sulfatoalkylgruppen überführt.

Verbindungen der Formel (1) mit Y oder Y' gleich einer β-Sulfatoethyl-Gruppe können anschliessend gemäss bekannten Verfahrensweisen in andere erfindungsgemässe Verbindungen der Formel (1) übergeführt werden, in welcher Y bzw. Y' für die Vinylgruppe oder eine Ethylgruppe mit einem anderen in β-Stellung befindlichen alkalisch eliminierbaren Substituenten stehen.

Die erfindungsgemässe Umsetzung einer Verbindung der allgemeinen Formel (3) oder zweier verschiedener Aminoverbindungen der allgemeinen Formel (3), jeweils in zusammen 2fach äquivalenter Menge, mit einem Äquivalent Chloranil zur Verbindung der allgemeinen Formel (5) kann in wässrigem Medium oder in wässrig-organischem Medium oder in rein organischem Medium erfolgen, wobei die organischen Lösemittel polare aprotische und protische Lösungsmittel darstellen, wie beispielsweise niedere Alkanole, wie Methanol und Ethanol, und halogenierte Benzole, wie o-Dichlorbenzol. Bevorzugt wird das Chloranil jedoch in einem mehr oder weniger stärkeren Überschuss eingesetzt, der in der Regel 5–20% beträgt. Die erfindungsgemässe Umsetzung der Amine (3) mit Chloranil kann bei einer Temperatur zwischen 20 und 100 °C, vorzugsweise zwischen 50 und 70 °C, in Gegenwart eines säurebindenden Mittels, wie beispielsweise eines

Alkali- oder Erdalkalicarbonats oder -acetats so beispielsweise Natriumacetat, Natriumcarbonat oder Natriumbicarbonat, oder eines Alkali- oder Erdalkalihydroxids, wie Natriumhydroxid, oder eines Oxids eines Erdalkalimetalls, wie beispielsweise Magnesiumoxid, durchgeführt werden. Sofern in einem wässrigen oder wässrig-organischen Medium gearbeitet wird, wird ein pH-Bereich zwischen 4 und 7, vorzugsweise zwischen 5,5 und 6,5, eingestellt.

Das Anil der Formel (5) wird sodann, vorzugsweise nach vorheriger Isolierung, in an und für sich üblicher und bekannter Verfahrensweise unter oxidierenden Bedingungen in Schwefelsäure oder Schwefeltrioxid enthaltender Schwefelsäure als Medium zur Triphendioxazin-Verbindung cyclisiert. Als Oxidationsmittel können das Schwefeltrioxid selbst sowie Ammonium- oder Alkalipersulfate, Natriumperborat, vorzugsweise jedoch Natrium- oder Kaliumperoxodisulfat (entsprechend den Formeln $Na_2S_2O_8$ bzw. $K_2S_2O_8$), dienen.

Vorzugsweise führt man die Umsetzung in konzentrierter Schwefelsäure, wie 96- bis bevorzugt 100%iger Schwefelsäure und insbesondere in Schwefeltrioxid enthaltender Schwefelsäure (Oleum), wie bis zu 30 gew.-%igem Oleum, durch. Die Reaktionstemperatur wird zwischen 5 und 40 °C, gegebenenfalls auch bis zu 80 °C, bevorzugt jedoch zwischen 15 und 25 °C und insbesondere bevorzugt zwischen 20 und 25 °C gewählt.

Beim Ringschluss in Schwefelsäure oder Oleum als Reaktionsmedium werden Hydroxygruppen, die an einem Alkylrest des Moleküls gebunden sind, wie beispielsweise die oben bereits erwähnten β-Hydroxyethyl-Gruppen des Formelrestes $Y^1$ oder Hydroxyalkyl-Gruppen der Formelreste $R^3$ und $R^4$, in die entsprechenden Sulfatoalkylgruppen übergeführt. Bei Verwendung von Oleum soll die Reaktionstemperatur 30 °C nicht überschreiten. Bei Temperaturen oberhalb von etwa 35 °C, wie bei Temperaturen zwischen 40 und 60 °C, lassen sich erfindungsgemäss auch Sulfogruppen in die aromatischen Ringe des Triphendioxazins (die entsprechenden Arylreste von $R^1$ und $R^2$ eingeschlossen) einführen.

Das als Reaktionsmedium und Agenz verwendete Oleum besitzt in der Regel einen Gehalt von 5 bis 30 Gew.-%, bevorzugt 10 bis 20 Gew.-% an Schwefeltrioxid.

Bekannte Verfahrensweisen zur Umsetzung von aromatischen Aminen mit 1,4-Benzochinonen, die zu Triphendioxazinverbindungen führen, sind beispielsweise in K. Venkataraman, «The Chemistry of Synthetic Dyes», Band V, S. 419–427 (1971), und in Ullmanns Encyklopädie der technischen Chemie, 4. Auflage, Band 8, S. 240 + 241 (1974) sowie der deutschen Offenlegungsschrift Nr. 28 23 828 beschrieben.

Die Ausgangsverbindungen entsprechend der allgemeinen Formel (3) sind bisher noch nicht bekannt. Sie lassen sich jedoch analog bekannten Verfahrensweisen der Umsetzung von Nitrochlorbenzolen mit Aminen herstellen, so beispielsweise durch Umsetzung eines Chlornitrobenzols der allgemeinen Formel (6)

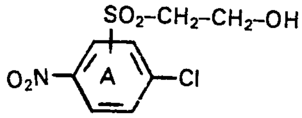

(6)

in welcher A die für Formel (3) genannte Bedeutung besitzt, mit einem Amin der allgemeinen Formel $HNR^3R^4$ mit $R^3$ und $R^4$ der obengenannten Bedeutung entweder in einem Überschuss des Amins der Formel $HNR^3R^4$ oder in Wasser oder einem organischen Medium, wie einem Alkanol, beispielsweise Methanol, Dioxan und Toluol, oder in einem Gemisch von Wasser und von wassermischbaren organischen Lösemitteln, unter Zusatz eines basischen, säurebindenden Mittels, wie beispielsweise Kaliumcarbonat, Natriumcarbonat oder Natriumhydroxid, bei einer Temperatur zwischen 20 und 90 °C, vorzugsweise zwischen 40 und 70 °C. In wässrigem Medium wird ein pH-Wert zwischen 6 und 10, bevorzugt zwischen 8 und 9, eingehalten. Solche Verfahrensweisen sind beispielsweise aus Verfahren zur Herstellung von p-Nitrodiphenylamin-o-sulfonsäure aus 2-Chlor-5-nitrobenzolsulfonsäure bekannt (s. beispielsweise Chem. Ber. 41, 3744 ff., und 42, 1077 ff.), die in der reduzierten Form ebenfalls als Ausgangsverbindungen für Dioxazinfarbstoffe dienen.

Die auf diese Weise erhältliche Nitro-anilin-Verbindung der allgemeinen Formel (7)

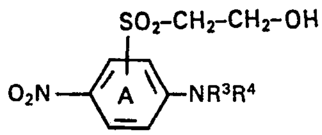

(7)

in welcher A, $R^3$ und $R^4$ die obengenannten, für A insbesondere die für Formel (3) genannten, Bedeutungen haben, kann sodann nach an und für sich üblichen Methoden der Reduktion von aromatischen Nitrogruppen mittels Wasserstoff und einem metallischen Katalysator, wie einem Palladium-, Platin- oder Raney-Nickelkatalysator, unter Druck im Autoklaven oder mittels der Reduktion nach Béchamp bei Verwendung von Eisenspänen zur Verbindung entsprechend der allgemeinen Formel (3), in welcher $Y^1$ für die β-Hydroxyethyl-Gruppe steht, synthetisiert werden. Aus der 2-(β-Hydroxyethylsulfonyl)-1,4-phenylendiamin-Verbindung entsprechend der allgemeinen Formel (3) lassen sich die faserreaktiven Ausgangsverbindungen entsprechend der allgemeinen Formel (3), in denen $Y^1$ für die Vinylgruppe oder eine Ethylgruppe, die in β-Stellung einen durch Alkali eliminierbaren Substituenten enthält, steht in allgemein bekannter Verfahrensweise der Überführung der β-Hydroxyethylsulfonyl-Gruppe in solche Gruppen herstellen. Bevorzugt wird die β-Hydroxyethylsulfonyl-Gruppe in die β-Sulfatoethylsulfonyl-Gruppe übergeführt.

Besonders vorteilhaft jedoch geht man nicht, wie bereits oben erwähnt, bei der Herstellung der β-Sulfatoethylsulfonyl-Verbindungen der Formel (1) von den faserreaktiven Ausgangsverbindungen aus, sondern von denjenigen der allgemeinen Formel (3), in denen $Y^1$ für die β-Hydroxyethyl-Gruppe steht. Diese werden in erfindungsgemässer Weise mit 2,3,5,6-Tetrachlor-1,4-benzochinon über die Anilzwischenisolierung zum Triphendioxazin umgesetzt, und die hierbei entstehende Triphendioxazinverbindung mit den β-Hydroxyethylsulfonyl-Gruppen wird nachträglich verestert (sulfatisiert) nach an und für sich üblichen Verfahrensweisen, die zahlreich für die Überführung von Farbstoffen mit einer β-Hydroxyethylsulfonyl-Gruppe in Farbstoffe mit einer β-Sulfatoethylsulfonyl-Gruppe beschrieben sind, beispielsweise mit 95- bis 100%iger Schwefelsäure oder mit Chlorsulfonsäure oder mit Schwefeltrioxid enthaltender Schwefelsäure. Insbesondere erfolgt die Sulfatierung, wie oben erwähnt, bereits vor oder während des oxidativen Ringschlusses mittels Schwefelsäure oder Oleum, das gleichzeitig als Reaktionsmedium dienen kann, so dass der Einsatz von Ausgangsverbindungen der allgemeinen Formel (3), die die β-Sulfatoethylsulfonyl-Gruppe bereits enthalten, nicht erforderlich ist.

Chlornitrobenzolverbindungen entsprechend der allgemeinen Formel (6) sind bekannt (s. beispielsweise deutsche Patentschrift 859 462, Beispiel 5). Sie lassen sich durch Nitrierung einer entsprechenden (β-Hydroxyethylsulfonyl)-chlorbenzol-Verbindung in an und für sich üblicher Verfahrensweise oder, in ebenso an und für sich bekannten Verfahrensweisen, durch Reduktion einer entsprechenden 1-Chlor-4-nitro-benzolsulfochlorid-Verbindung mittels Natriumsulfit zur entsprechenden Sulfinsäure und anschliessende Oxethylierung der Sulfinsäure zur β-Hydroxyethylsulfonyl-Verbindung synthetisieren.

Ausgangsverbindungen der allgemeinen Formel (3) sind beispielsweise 3-(β-Hydroxyethylsulfonyl)-anilin-Verbindungen, die in 4-Stellung durch eine (β-Hydroxyethyl)-amino-Gruppe oder durch eine (γ-Hydroxypropyl)-amino-, eine (β-Sulfatoethyl)-amino-, eine (γ-Sulfatopropyl)-amino-, eine (β-Sulfoethyl)-amino-, eine Bis-(β-sulfatoethyl)-amino- oder Bis-(β-sulfoethyl)-amino-Gruppe oder durch eine andere in den nachfolgenden Tabellenbeispielen angegebenen Aminogruppe entsprechend der Formel $-NR^3R^4$ substituiert sind und in 4-Stellung bevorzugt durch eine (β-Hydroxyethyl)-amino-, (γ-Hydroxypropyl)-amino-, (β-Hydroxy-propyl)-amino-, (β-Sulfoethyl)-amino-, (γ-Sulfo-propyl)-amino-, β-(4-Sulfophenyl)-ethyl-amino-, β-(2,4-Disulfophenyl)-ethyl-amino-, β-(2-Sulfo-4-β-hydroxyethylsulfonyl) -ethyl-amino-, Bis-(β-hydroxyethyl)-amino-, Bis-(β-sulfoethyl)-amino-, N-Methyl-N-(β-hydroxyethyl)-amino-, N-Ethyl-N-(β-hydroxyethyl)-amino-, N-Methyl-(β-sulfoethyl)-amino- oder N-Ethyl-N-(β-sulfoethyl)-amino-Gruppe, ganz besonders bevorzugt aber durch eine Hydroxyalkyl-amino-Gruppe von 1 bis 4 C-Atomen, wie die (β-Hydroxyethyl)-, (γ-Hydroxypropyl)- oder (β-Hydroxypropyl)amino-Gruppe, substituiert sind.

Die Abscheidung und Isolierung der erfindungsgemäss hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemässen Verbindungen der allgemeinen Formel (1) haben faserreaktive Eigenschaften und besitzen wertvolle Farbstoffeigenschaften. Sie können deshalb zum Färben (einschliesslich Bedrucken) von hydroxygruppenhaltigen und/oder carbonamidgruppenhaltigen Materialien, beispielsweise in Form von Flächengebilden, wie Papier und Leder, oder in der Masse, von Polyamid oder Polyurethan, insbesondere aber von solchen Materialien in Faserform, verwendet werden. Auch können die bei der Synthese der erfindungsgemässen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemässen Verbindungen der allgemeinen Formel (1) zum Färben (einschliesslich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemässen Verbindungen der Formel (1) lassen sich gemäss der erfindungsgemässen Anwendung, auf den genannten Substraten, insbesondere auf den genannten Fasermaterialien, nach den für wasserlösliche, insbesondere faserreaktive, Farbstoffe bekannten Anwendungstechniken applizieren und fixieren, so beispielsweise, indem man die Dioxazinverbindung

der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen guten Farbaufbau. Man färbt bevorzugt in wässrigem Bad bei Temperaturen zwischen 40 und 100 °C, gegebenenfalls bei Temperaturen bis zu 120 °C unter Druck, und gegebenenfalls in Gegenwart von üblichen Färbereihilfsmitteln.

Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60 °C, durch Dämpfen oder mit Trockenhitze im üblicher Weise fixiert werden kann.

Ebenfalls nach den üblichen Druckverfahren für Cellulosefasern, die einphasig, beispielsweise durch Bedrucken mittels einer die erfindungsgemässe Verbindung und Natriumbicarbonat oder ein anderes säurebindendes Mittel enthaltenden Druckpaste und anschliessendes Dämpfen bei 100 bis 103 °C, oder zweiphasig, beispielsweise durch Bedrucken mittels einer die erfindungsgemässe Verbindung enthaltenden neutralen oder schwach sauren Druckpaste und anschliessendes Fixieren der erfindungsgemässen Verbindung entweder durch Hindurchführen des bedruckten Materials durch ein heisses alkali- und elektrolythaltiges Bad oder durch Überklotzen mit einer alkalischen elektrolythaltigen Klotzflotte und anschliessendes Verweilen dieses überklotzten Materials oder Dämpfen oder Behandlung mit Trokkenhitze, durchgeführt werden können, erhält man farbstarke Drucke mit gutem Stand der Konturen und einem klaren Weissfond. Der Ausfall der Drucke ist von wechselnden Fixierbedingungen nur wenig abhängig.

Bei der Fixierung mittels Trockenhitze nach den üblichen Thermofixierverfahren verwendet man Heissluft von 120 bis 200 °C. Neben dem üblichen Wasserdampf von 101 bis 103 °C kann auch überhitzter Dampf und Druckdampf von Temperaturen bis zu 160 °C eingesetzt werden.

Sowohl in der Färberei als auch in der Druckerei sind die mit den erfindungsgemässen Dioxazin-Verbindungen erhaltenen Fixiergrade hoch.

Die säurebindenden und die Fixierung der Verbindung der Formel (1) auf den Cellulosefasern bewirkenden Mittel sind beispielsweise wasserlösliche basische Salze der Alkalimetalle und Erdalkalimetalle von organischen oder anorganischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, vorzugsweise deren Natrium- und Kaliumverbindungen. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemässen Verbindungen (Farbstoffe) mit den säurebindenden Mitteln, gegebenenfalls unter Wärmeeinwirkung, werden die erfindungsgemässen Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Nassechtheiten, zumal sich nicht fixierte Farbstoffanteile gut auswaschen lassen.

Die Färbungen auf Polyurethan oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat zufügen, um den gewünschten pH-Wert zu erhalten, Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 °C in das Bad eingebracht, dort einige Zeit darin bewegt, das Färbebad dann auf den gewünschten schwach sauren, vorzugsweise schwach essigsauren pH-Wert, wie einen pH-Wert zwischen 3,5 und 5,5, nachgestellt und die eigentliche Färbung bei einer Temperatur zwischen 60 und 98 °C und unter Kontrolle dieses pH-Wertes durchgeführt. Die Färbungen können aber auch bei Siedetemperatur oder bei Temperaturen bis 106 °C oder aber bis zu 120 °C (unter Druck) ausgeführt werden. Gegen Ende der Färbezeit kann der pH-Wert in den neutralen und gegebenenfalls schwach alkalischen Bereich bis zu einem pH-Wert von 8,5 verschoben werden, um besonders bei einer erwünschten Erzielung von hohen Farbtiefen die volle reaktive Bindung zwischen dem Farbstoff der Formel (1) und der Faser herbeizuführen. Gleichzeitig wird der nicht reaktiv gebundene Farbstoffanteil abgelöst.

Die mit erfindungsgemässen Verbindungen der allgemeinen Formel (1) hergestellten Färbungen

und Drucke zeichnen sich durch reine, vorwiegend blaue Farbtöne aus. Insbesondere die Färbungen und Drucke auf Cellulosefasermaterialien besitzen sehr hohe Farbstärken und ebenso sehr gute Lichtechtheiten, einschliesslich guter Nasslicht- und Schweisslichtechtheiten, ebenso gute Hypochloritbleich- und Chlorbadewasserechtheiten, weiterhin vorzügliche Nassechtheiten, wie beispielsweise gute bis sehr gute Waschechtheiten bei 60 bis 95 °C, auch in Gegenwart von Perboraten, saure und alkalische Walk-, Überfärbe- und Schweissechtheiten, Alkali-, Säure-, Wasser- und Seewasserechtheiten, des weiteren eine gute Plissierechtheit, Bügelechtheit und Reibechtheit. Ebenso besitzen sie eine gute Nassliegeechtheit und eine sehr gute Säurelagerbeständigkeit («acid fading») beim Lagern von feuchten, noch Essigsäure enthaltendem, gefärbtem Material. Des weiteren sind die Färbungen gegen die üblichen Kunstharzappreturen stabil. Ein Teil der erfindungsgemässen Verbindungen (Farbstoffe) sind in der Reinheit des Farbtones und in wichtigen Echtheitseigenschaften mit faserreaktiven Anthrachinonfarbstoffen vergleichbar.

Ebenso von Bedeutung ist die erfindungsgemässe Verwendung der Verbindungen der allgemeinen Formel (1) für das faserreaktive Färben von Wolle. Insbesondere lässt sich auch filzfrei oder filzarm ausgerüstete Wolle (vgl. bspw. H. Rath, Lehrbuch der Textilchemie, Springer-Verlag, 3. Auflage (1972), S. 295–299, insbesondere die Ausrüstung nach dem sogenannten Hercosett-Verfahren (S. 298); J. Soc. Dyers and Colourists 1972, 93–99, und 1975, 33–44) mit sehr guten Echtheitseigenschaften färben.

Da die Wasserlöslichkeit der Verbindungen der allgemeinen Formel (1) sehr gut ist, lassen sie sich auch mit Vorteil bei üblichen kontinuierlichen Färbeverfahren einsetzen.

Die Farbstärke der erfindungsgemässen Verbindungen der allgemeinen Formel (1) ist auch auf Wolle und Polyamidfasermaterialien sehr hoch. Sie liefern auf diesen Fasermaterialien, insbesondere beim reaktiven Färben von Wolle, klare, vorwiegend blaue, Färbungen. Bei Anwendung von Färbetemperaturen von 100 bis 106 °C ist eine hohe Baderschöpfung festzustellen.

Bei den mit den erfindungsgemässen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionellen ähnlichen, bekannten Farbstoffen zeigen sie in überraschender Weise einen sehr guten Farbaufbau, wobei die brillante Nuance in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso lässt sich Material aus Wollfasern unterschiedlicher Provenienz mit der erfindungsgemässen Verbindung egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmitteln ergeben die erfindungsgemässen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Nassechtheitsniveau zu erzielen, wobei jedoch gegebenenfalls eine ammoniakalische Nachbehandlung bevorzugt werden kann. Neben der hohen Lichtechtheit dieser Wollfärbungen sind als sehr gute Nassechtheitseigenschaften insbesondere die ausgezeichnete alkalische Schweissechtheit und sehr gute Waschechtheit bei 60 °C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmässig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Beispiel 1

a) 548 Teile 3-(β-Hydroxyethylsulfonyl)-4-(β-hydroxy-isopropyl-amino)-anilin werden in 6000 Teilen Wasser bei 65 °C klar gelöst. 248 Teile Chloranil werden eingetragen, und es wird während der Reaktion mit etwa 180 Teilen Natriumbicarbonat ein pH-Wert von 6 bis 6,5 bei einer Reaktionstemperatur von etwa 65 °C gehalten. Der Ansatz wird noch eine Stunde nachgerührt, das Reaktionsprodukt bei etwa 60 °C abgesaugt, mit 4000 Teilen Wasser gewaschen und unter reduziertem Druck bei 70 °C getrocknet.

b) 723 Teile des unter a) erhaltenen Anil-Zwischenproduktes werden bei einer Temperatur zwischen 20 und 25 °C in 5000 Teile 10%iges Oleum eingetragen. Der Reaktionsansatz wird anschliessend noch etwa drei Stunden bei dieser Temperatur nachgerührt; sodann werden 481 Teile Natrium-peroxodisulfat eingetragen, und zwar in der Weise, dass die Reaktionstemperatur bei 20 bis 25 °C gehalten werden kann. Man rührt noch 15 Stunden bei dieser Temperatur nach, lässt den Ansatz sodann auf Eis laufen, stellt ihn mit Calciumcarbonat auf einen pH-Wert zwischen 1 und 1,5, sodann mit Natriumcarbonat auf einen pH-Wert von 5,5, filtriert das ausgefallene Calciumsulfat ab, wäscht es mit Wasser aus und vereinigt die Filtrate.

Die erfindungsgemässe Triphendioxazin-Verbindung kann in Form ihres Natriumsalzes durch

Eindampfen oder Sprühtrocknen des vereinigten Filtrates erhalten werden. Sie besitzt, in Form der freien Säure geschrieben, die mutmassliche Formel

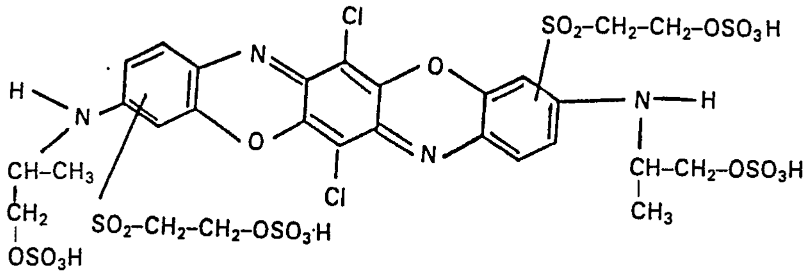

(die jeweilige β-Sulfatoethylsulfonyl-Gruppe kann auch in der anderen ortho-Stellung zur (β-Sulfatoisopropyl)-amino-Gruppe gebunden sein, befindet sich jedoch mit grösserer Wahrscheinlichkeit in der durch die obige Formel angegebenen Stellung jeweils ortho-ständig zum Dioxazin-Sauerstoffatom und Amino-Stickstoffatom).

Diese erfindungsgemässe Verbindung besitzt sehr gute faserreaktive Farbstoffeigenschaften. Sie färbt die in der Beschreibung genannten Materialien, insbesondere Cellulosefasermaterialien, wie Baumwolle, nach den in der Technik üblichen und bekannten Verfahrensweisen der Applikation und Fixierung von faserreaktiven Farbstoffen in farbstarken, reinen rotstichig blauen Tönen mit guten Echtheiten, wie insbesondere guter Lichtechtheit der trockenen oder feuchten, wie mit Trinkwasser befeuchteten Färbung, guter alkalischen Schweisslichtechtheit, Chlorbadewasserechtheit, Hypochloritechtheit, alkalischer Schweissechtheit, Waschechtheit, auch in Gegenwart von Perboraten, Nassliegeechtheit und Säurelagerbeständigkeit.

In wässriger Lösung zeigt sie im sichtbaren Bereich ein Absorptionsmaximum bei 615 nm.

Beispiel 2

Die erfindungsgemässe Triphendioxazin-Verbindung des Beispieles 1 kann auch in folgender Weise hergestellt werden:

a) 548 Teile 3-(β-Hydroxyethylsulfonyl)-4-(β-hydroxy-isopropyl-amino)-anilin, 115 Teile Magnesiumoxid und 248 Teile 2,3,5,6-Tetrachlor-1,4-benzochinon werden in 3000 Teilen Wasser aufgeschlämmt. Die Suspension wird auf 65 °C erwärmt und bei dieser Temperatur noch 2 bis 5 Stunden weitergerührt und anschliessend auf 20 °C abgekühlt. Das dunkelbraune Reaktionsprodukt wird abfiltriert, mit Wasser gewaschen und bei 60 °C getrocknet.

b) 723 Teile des unter a) erhaltenen Kondensationsproduktes (Anilverbindung) werden zwecks Sulfatierung der β-Hydroxyalkyl-Gruppen zu den β-Sulfatoalkyl-Gruppen und Ringschlussreaktion zur Triphendioxazinverbindung in 4000 Teile 20%iges Oleum unter Rühren eingetragen, und zwar in der Weise, dass die Reaktionstemperatur bei 18 bis 20 °C gehalten werden kann. Die weitere Arbeitsweise erfolgt gemäss der im Beispiel 1 angegebenen Verfahrensweise.

Die nach diesem Beispiel erhaltene erfindungsgemässe Triphendioxazin-Verbindung mit der im Beispiel 1 angegebenen (mutmasslichen) Formel besitzt dieselben guten faserreaktiven Farbstoffeigenschaften, wie in Beispiel 1 beschrieben.

Beispiel A-1

Herstellung der Ausgangsverbindung 3-(β-Hydroxyethylsulfonyl)-4-(β-hydroxyethylamino)-anilin:

Zu einer Lösung von 76,5 Teilen Ethanolamin in 500 Volumenteilen Methanol gibt man bei einer Temperatur von 65 °C 132,8 Teile 2-(β-Hydroxyethylsulfonyl)-4-nitro-chlorbenzol langsam hinzu und rührt den Reaktionsansatz bei dieser Temperatur noch 6 Stunden weiter. Anschliessend destilliert man unter gleichzeitigem kontinuierlichem Zulauf von Wasser 400 Volumenteile Methanol aus dem Reaktionsansatz ab. Aus dem nunmehr wässrigen Medium kristallisiert beim Abkühlen das 2-(β-Hydroxyethylsulfonyl)-4-nitro-1-(β-hydroxyethyl)-amino-benzol in hoher Reinheit aus. Dieses kann zur Überführung der Nitrogruppe in die Aminogruppe in die katalytische Hydrierung eingesetzt werden. Hierfür werden 58 Teile dieser Nitroverbindung in 400 Volumenteilen Methanol gelöst und in Gegenwart eines Nickelkatalysators in einem Autoklaven bei einer Temperatur von 100 °C und einem Druck von 50 bar Wasserstoff hydriert. Der Katalysator wird anschliessend abfiltriert und das Filtrat durch Abkühlen der methanolischen Lösung auskristallisieren lassen. Das 3-(β-Hydroxyethylsulfonyl)-4-(β-hydroxyethylamino)-anilin wird in guter Ausbeute und hoher Reinheit erhalten.

Beispiele 3 bis 26

In den nachfolgenden Tabellenbeispielen sind weitere erfindungsgemässe Triphendioxazin-Verbindungen entsprechend einer allgemeinen Formel (1a) und dem entsprechenden Formelrest $R^2$ beschrieben. Sie lassen sich in erfindungsgemässer Weise, beispielsweise analog den obigen Ausführungsbeispielen 1 und 2, durch Umsetzung von Chloranil mit einer Anilinverbindung entsprechend der allgemeinen Formel (3a) mit $R'_2$ der in dem jeweiligen Tabellenbeispiel angegebenen Bedeutung und nachträglicher Sulfatierung und Cyclisierung herstellen. Diese erfindungsgemässen Triphendioxazin-Verbindungen besitzen ebenfalls sehr gute faserreaktive Farbstoffeigenschaften und liefern auf den in der Beschreibung genannten Materialien, wie insbesondere Cellulosefasermaterialien, farbstarke, echte Färbungen

mit dem in dem jeweiligen Tabellenbeispiel auf Baumwolle angegebenen Farbton. Die Absorptionsmaxima ($\lambda_{max}$ in nm) wurden aus wässriger Lösung ermittelt.

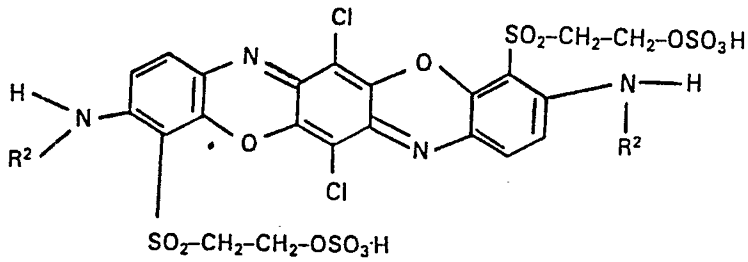

(1a)

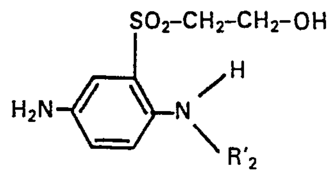

(3a)

| Bsp. | Verbindung der Formel (1a) mit $R^2$ gleich ... | Ausgangsamin (3a) mit $R'_2$ gleich ... | Farbton ($\lambda_{max}$) |
|---|---|---|---|
| 3 | 3-Chlor-2-sulfato-propyl | 3-Chlor-2-sulfato-propyl | rotstichig blau |
| 4 | Sulfato-tert.-butyl | Hydroxy-tert.-butyl | dito |
| 5 | 3-Sulfato-2-methyl-propyl | 3-Hydroxy-2-methyl-propyl | dito |
| 6 | 3-Sulfato-1-methyl-propyl | 3-Hydroxy-1-methyl-propyl | dito |
| 7 | 1-(Sulfatomethyl)-propyl | 1-(Hydroxymethyl)-propyl | dito (617) |
| 8 | 2-Sulfato-1-methyl-propyl | 2-Hydroxy-1-methyl-propyl | dito |
| 9 | 2-Sulfato-butyl | 2-Hydroxy-butyl | dito |
| 10 | 2-Sulfato-2-methyl-propyl | 2-Hydroxy-2-methyl-propyl | dito |
| 11 | 5-Sulfato-pentyl | 5-Hydroxy-pentyl | dito |
| 12 | 3-Sulfato-1-ethyl-propyl | 3-Hydroxy-1-ethyl-propyl | dito |
| 13 | 1-(Sulfatomethyl)-butyl | 1-(Hydroxymethyl)-butyl | dito |
| 14 | 4-Sulfato-2-methyl-butyl | 4-Hydroxy-2-methyl-butyl | dito |
| 15 | 2-Sulfato-1,2-dimethyl-propyl | 2-Hydroxy-1,2-dimethyl-propyl | dito |
| 16 | 2-Sulfato-1,1,2-trimethyl-propyl | 2-Hydroxy-1,1,2-trimethyl-propyl | dito |
| 17 | 3-Sulfato-1,3,3-trimethyl-propyl | 3-Hydroxy-1,3,3-trimethyl-propyl | dito |
| 18 | 2-Sulfato-2,5-dimethyl-pentyl | 2-Hydroxy-2,5-dimethyl-pentyl | dito |
| 19 | 1-(2'Sulfatoethyl)-butyl | 1-(2'-Hydroxyethyl)-butyl | dito |
| 20 | 4-Sulfato-1-methyl-butyl | 4-Hydroxy-1-methyl-butyl | dito |
| 21 | 1-(Sulfatomethyl)-2-sulfato-ethyl | 1,3-Dihydroxy-propyl(2) | dito |
| 22 | 1,1-Bis-(sulfatomethyl)-ethyl | 1,1-Bis-(hydroxymethyl)-ethyl | dito |
| 23 | 2-(2'-Sulfo-4'-β-sulfato-ethylsulfonyl-phenyl)-ethyl | 2-(2'-Sulfo-4'-β-hydroxy-ethylsulfonyl-phenyl)-ethyl | dito |
| 24 | 3-Sulfato-2,2-dimethyl-propyl | 3-Hydroxy-2,2-dimethyl-propyl | dito |
| 25 | 2-(4'-β-Sulfatoethylsulfonyl-phenyl)-ethyl | 2-(4'-β-Hydroxyethylsulfonyl-phenyl)-ethyl | dito |
| 26 | 2-Sulfato-1-carboxy-ethyl | 2-Hydroxy-1-carboxy-ethyl | dito |

Beispiele 27 bis 58

In den nachfolgenden Tabellenbeispielen sind weitere erfindungsgemässe Triphendioxazin-Verbindungen entsprechend einer allgemeinen Formel (1a) mit den entsprechenden Formelresten $R^2$ beschrieben. Sie lassen sich in erfindungsgemässer Weise, beispielsweise analog den obigen Ausführungsbeispielen 1 und 2, durch Umsetzung von Chloranil mit einer Anilinverbindung entsprechend der allgemeinen Formel (3), in welcher $Y^1$ die β-Sulfatoethyl- oder β-Hydroxyethyl-Gruppe ist, die Gruppe $-SO_2-Y^1$ in ortho-Stellung zur Aminogruppe $-NR^1R^2$ steht, $R^1$ ein Wasserstoffatom ist und $R^2$ die in dem jeweiligen Tabellenbeispiel für Formel (1a) angegebene Bedeutung hat, und nachträglicher oxidativer Cyclisierung und Sulfatisierung der β-Hydroxyethylsulfonyl-Gruppe herstellen. Diese erfindungsgemässen Triphendioxazin-Verbindungen besitzen ebenfalls sehr gute faserreaktive Farbstoffeigenschaften und liefern auf den in der Beschreibung genannten Materialien, wie insbesondere Cellulosefasermaterialien, farbstarke, echte Färbungen mit dem in dem jeweiligen Tabellenbeispiel auf Baumwolle angegebenen Farbton.

| Bsp. | Verbindung der Formel (1a) mit $R^2$ gleich . . . | Farbton |
|---|---|---|
| 27 | 3-Sulfo-propyl | rotstichig blau |
| 28 | 2-Sulfo-propyl | dito |
| 29 | 2-Sulfo-butyl | dito |
| 30 | 3-Sulfo-1-methyl-butyl | dito |
| 31 | 1-Carboxy-ethyl | dito |
| 32 | 2-Carboxy-ethyl | dito |
| 33 | 3-Carboxy-propyl | dito |
| 34 | 5-Carboxy-pentyl | dito |
| 35 | ω-Carboxy-isopropyl | dito |
| 36 | 1-Carboxy-propyl | dito |
| 37 | 1-Carboxy-2-sulfo-ethyl | dito |
| 38 | 2-Carboxy-2-sulfo-ethyl | dito |
| 39 | 3-Carboxy-3-sulfo-propyl | dito |
| 40 | 2-(2,4-Disulfophenyl)-ethyl | dito |
| 41 | 3-Sulfo-phenyl | dito |
| 42 | 4-Amino-3-sulfo-phenyl | dito |
| 43 | 4-Dimethylamino-3-sulfo-phenyl | dito |
| 44 | 4-Acetylamino-3-sulfo-phenyl | dito |
| 45 | 4-Carboxy-phenyl | dito |
| 46 | Wasserstoff | dito |
| 47 | Methyl | dito |
| 48 | Ethyl | dito |
| 49 | Propyl | dito |
| 50 | Phenyl | dito |
| 51 | Benzyl | dito |
| 52 | Phenethyl | dito |
| 53 | 2-Acetylamino-ethyl | dito |
| 54 | 3-Methylamino-propyl | dito |
| 55 | 2-Chlor-ethyl | dito |
| 56 | 4-Acetylamino-phenyl | dito |
| 57 | 2-Ethoxy-ethyl | dito |
| 58 | 4-Amino-cyclohexyl | dito |

Beispiele 59 bis 73

In den nachfolgenden Tabellenbeispielen sind weitere erfindungsgemässe Triphendioxazin-Verbindungen entsprechend einer allgemeinen Formel (1b)

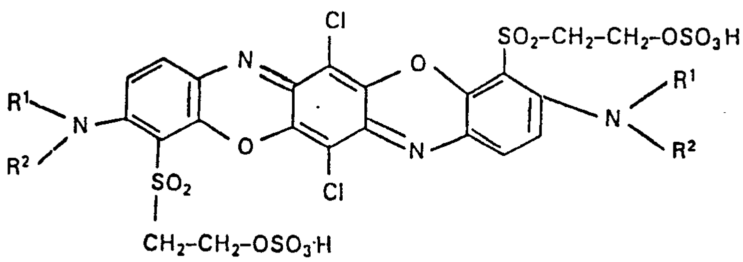

(1b)

mit den entsprechenden Formelresten $R^1$ und $R^2$ beschrieben. Sie lassen sich in erfindungsgemässer Weise, beispielsweise analog den obigen Ausführungsbeispielen 1 und 2, durch Umsetzung von Chloranil mit einer Anilinverbindung entsprechend der allgemeinen Formel (3b)

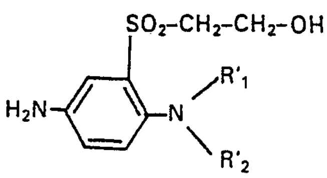

(3b)

mit $R'_1$ und $R'_2$ der in dem jeweiligen Tabellenbeispiel angegebenen Bedeutung und nachträglicher Sulfatierung und Cyclisierung herstellen. Diese erfindungsgemässen Triphendioxazin-Verbindungen besitzen ebenfalls sehr gute faserreaktive Farbstoffeigenschaften und liefern auf den in der Beschreibung genannten Materialien, wie insbesondere Cellulosefasermaterialien, farbstarke, echte Färbungen mit dem in dem jeweiligen Tabellenbeispiel auf Baumwolle angegebenen Farbton.

| Bsp. | Verbindung der Formel (1b) mit $R^1$ gleich . . . | mit $R^2$ gleich . . . | Verbindung der Formel (3b) mit $R'_1$ gleich . . . | mit $R'_2$ gleich . . . | Farbton |
|---|---|---|---|---|---|
| 59 | Ethyl | 2-Sulfato-ethyl | Ethyl | 2-Hydroxy-ethyl | rotstichig blau |
| 60 | 2-Sulfato-ethyl | dito | 2-Hydroxy-ethyl | dito | dito |
| 61 | ω-Sulfato-isopropyl | ω-Sulfato-isopropyl | ω-Hydroxy-isopropyl | ω-Hydroxy-isopropyl | dito |
| 62 | 2-Sulfato-propyl | 2-Sulfato-propyl | 2-Hydroxy-propyl | 2-Hydroxy-propyl | dito |
| 63 | 2-Sulfo-ethyl | 2-Sulfo-ethyl | 2-Sulfo-ethyl | 2-Sulfo-ethyl | dito |
| 64 | Methyl | dito | Methyl | dito | dito |
| 65 | Ethyl | dito | Ethyl | dito | dito |
| 66 | Carboxymethyl | Carboxymethyl | Carboxymethyl | Carboxymethyl | dito |
| 67 | Methyl | Carboxymethyl | Methyl | Carboxymethyl | dito |
| 68 | Methyl | Methyl | Methyl | Methyl | dito |
| 69 | 2-Ethoxy-ethyl | 2-Ethoxy-ethyl | 2-Ethoxy-ethyl | 2-Ethoxy-ethyl | dito |
| 70 | $-NR^1R^2$ gleich Piperidino | | $-NR'_1R'_2$ gleich Piperidino | | dito |
| 71 | $-NR^1R^2$ gleich Morpholino | | $-NR'_1R'_2$ gleich Morpholino | | dito |
| 72 | 3-Sulfato-propyl | 3-Sulfato-propyl | 3-Hydroxy-propyl | 3-Hydroxy-propyl | dito |
| 73 | Methyl | Sulfomethyl | Methyl | Sulfomethyl | dito |

Beispiele 74 bis 82

In den nachfolgenden Tabellenbeispielen sind weitere erfindungsgemässe Triphendioxazin-Verbindungen entsprechend der allgemeinen Formel (1a) und dem entsprechenden Formelrest $R^2$ beschrieben. Sie lassen sich in erfindungsgemässer Weise, beispielsweise analog den Ausführungsbeispielen 1 und 2, durch Umsetzung von Chloranil mit einer Anilinverbindung entsprechend der allgemeinen Formel (3a) mit $R'_2$ der in dem jeweiligen Tabellenbeispiel angegebenen Bedeutung und nachträglicher Sulfatierung und Cyclisierung herstellen. Diese erfindungsgemässen Triphendioxazin-Verbindungen besitzen ebenfalls sehr gute faserreaktive Farbstoffeigenschaften und liefern auf den in der Beschreibung genannten Materialien, wie insbesondere Cellulosefasermaterialien, farbstarke, echte Färbungen mit dem in dem jeweiligen Tabellenbeispiel auf Baumwolle angegebenen Farbton.

| Bsp. | Verbindung der Formel (1a) mit $R^2$ gleich . . . | Ausgangsamin (3a) mit $R'_2$ gleich . . . | Farbton ($\omega_{max}$) |
|---|---|---|---|
| 74 | 2-[Bis-(β-sulfatoethyl)]-amino-ethyl | 2-[Bis-(β-hydroxyethyl)]-amino-ethyl | rotstichig blau |
| 75 | 3-[Bis-6β-sulfatoethyl)]-amino-propyl | 3-[Bis-(β-hydroxyethyl)]-amino-propyl | dito |

| Bsp. | Verbindung der Formel (1a) mit $R^2$ gleich . . . | Ausgangsamin (3a) mit $R'_2$ gleich . . . | Farbton ($\omega_{max}$) |
|---|---|---|---|
| 76 | $-CH_2-CH_2-(O-CH_2-CH_2)_2-OSO_3H$ | $-CH_2-CH_2-(O-CH_2-CH_2)_2-OH$ | dito (617) |
| 77 | $-CH_2-CH_2-(O-CH_2-CH_2)_3-OSO_3H$ | $-CH_2-CH_2-(O-CH_2-CH_2)_3-OH$ | dito (617) |
| 78 | $-CH_2-CH_2-(O-CH_2-CH_2)_4-OSO_3H$ | $-CH_2-CH_2-(O-CH_2-CH_2)_4-OH$ | dito (617) |
| 79 | 3-[N-Methyl-N-(β-sulfato-ethyl]-amino-propyl | 3-[N-Methyl-N-(β-hydroxy-ethyl]-amino-propyl | dito |
| 80 | 2-(β-Sulfato-β-methyl-ethyl)-amino-ethyl | 2-(β-Hydroxy-β-methyl-ethyl)-amino-ethyl | dito (592) |
| 81 | β-Phosphatoethyl | β-Phosphatoethyl | dito |
| 82 | Tri-(sulfatomethyl)-methyl | Tri-(hydroxymethyl)-methyl | dito |

Anwendungsbeispiel 1

Zur Färbung eines Baumwollgewebes wird ein wässriges Färbebad hergestellt, das in 2000 Volumenteilen 2 Teile des Farbstoffes von Beispiel 1 oder 2, 10 Teile wasserfreies Natriumsulfat, 10 Teile wasserfreies Natriumcarbonat und 4 Volumenteile einer 32,5%igen wässrigen Natronlauge gelöst enthält. In dieses Färbebad werden 100 Teile eines Baumwollgewebes gegeben, das bei einer Temperatur von 40 °C zwischen 60 und 90 Minuten gefärbt wird. Nach Seifen und Spülen in üblicher Weise erhält man eine farbstarke, brillante blaue Färbung mit den in der Beschreibung angegebenen sehr guten Gebrauchs- und Fabrikationsechtheiten.

Anwendungsbeispiel 2

Zum Bedrucken eines mercerisierten Baumwollgewebes wird eine Druckpaste verwendet, die auf 1000 Teile 15 Teile des Farbstoffes von Beispiel 1 oder 2, 50 Teile Harnstoff, 410 Teile Wasser, 500 Teile einer neutralen 4%igen wässrigen Alginatverdickung, 15 Teile Natriumbicarbonat und 10 Teile des Natriumsalzes der m-Nitrobenzoesäure enthält. Das Baumwollgewebe wird in üblicher Weise mit dieser Druckpaste bedruckt und nach dem Trocknen 10 bis 15 Minuten lang mit Wasserdampf von 101 bis 103 °C gedämpft. Nach diesem Fixierungsvorgang wird das Gewebe in üblicher Weise durch Spülen mit kaltem und warmem Wasser, durch Seifen bei Kochtemperatur und erneutem Spülen mit Wasser und anschliessendem Trocknen fertiggestellt. Man erhält einen farbstarken brillanten blauen Druck, der sehr gute Licht- und Nassechtheiten besitzt.

Anwendungsbeispiel 3

Zur Färbung eines Baumwollgewebes wird eine wässrige Klotzflotte hergestellt, die im Liter 20 Teile des Farbstoffes von Beispiel 1 oder 2, 100 Teile Harnstoff, 30 Teile wasserfreies Natriumsulfat und 16 Volumenteile einer wässrigen 32,5%igen Natronlauge enthält. Das Baumwollgewebe wird bei Zimmertemperatur mit einer Flottenaufnahme von 80% des Gewichtes des Baumwollgewebes foulardiert, auf eine Docke aufgewickelt, in eine Plastikfolie gehüllt und 24 Stunden lang bei Raumtemperatur liegengelassen. Während dieser Zeit fixiert der Farbstoff. Nach dem Seifen und Spülen in üblicher Weise erhält man eine farbstarke brillante blaue Färbung des Baumwollgewebes.

Anwendungsbeispiel 4

Es werden 15 Teile des Farbstoffes von Beispiel 1 oder 2 in 200 Teilen Wasser von 70 °C gelöst; diese Lösung wird in 500 Teile einer neutralen oder schwach sauren, 4%igen Alginatverdickung eingerührt. Mit 285 Teilen Wasser wird diese verdickte Farbstofflösung auf 1000 Teile aufgefüllt. Mit der so hergestellten Druckpaste wird in üblicher Weise ein Gewebe aus mercerisierter Baumwolle bedruckt, das anschliessend getrocknet und zur Fixierung des Farbstoffes durch ein 90 bis 105 °C heisses wässriges Fixierbad geführt wird, das in 1000 Teilen Wasser 100 Teile Natriumchlorid, 150 Teile wasserfreies Natriumcarbonat, 50 Teile wasserfreies Kaliumcarbonat und 70 Volumenteile einer 35%igen wässrigen Natronlauge enthält. Die Fixierung erfolgt hierbei bereits in wenigen Sekunden, so dass die Durchführung des bedruckten Gewebes sehr schnell ausgeführt werden kann. – Nach dieser Fixierbehandlung wird das Gewebe in üblicher Weise durch Spülen mit kaltem Wasser, durch heisses Waschen, erneutes Spülen mit Wasser und Trocknen fertiggestellt. Man erhält ein egales, blaues Druckmuster mit den in Beispiel 1 genannten sehr guten Licht- und Nassechtheiten.

Anwendungsbeispiel 5

Zwecks Färbung von 10 Teilen eines Garnes aus Wolle wird ein wässriges Bad hergestellt, das aus 0,25 Volumenteilen einer 60%igen wässrigen Essigsäure, 0,15 Teilen eines handelsüblichen Egalisierhilfsmittels für Wolle und 0,3 Teilen Ammoniumsulfat in 400 Teilen Wasser besteht. Die Wolle wird bei einer Temperatur von 30–40 °C und einem pH-Wert des Bades von 5–5,2 darin gut benetzt. Dem Bad wird sodann eine Lösung von 0,1 Teilen des Dioxazinfarbstoffes von Beispiel 1 oder 2 in 20 Teilen Wasser unter Rühren zugegeben. Man bewegt die Wolle weiterhin darin und lässt die Temperatur 5 Minuten bei 30 bis 40 °C, erhitzt sodann das Färbebad innerhalb von 40 Minuten auf 85 °C, färbt bei dieser Temperatur 10 Minuten weiter und erhitzt sodann das Färbebad innerhalb von 10 Minuten zum Sieden. Es wird 1

Stunde lang kochend weitergefärbt. Anschliessend wird das Bad auf 80 °C abgekühlt. Der verwendete Farbstoff ist auf der Wolle sehr gut aufgezogen. Die Nachbehandlung des gefärbten Wollgarnes kann deshalb im selben Bad erfolgen. Man gibt Ammoniak bis auf einen pH-Wert von 8–8,5 hinzu und behandelt das Material 15 Minuten bei diesem pH und bei einer Temperatur von 80 °C. Man nimmt es heraus, spült es mit warmem und kaltem Wasser und trocknet es. Es wird eine farbstarke blaue Färbung mit sehr guten Licht- und Nassechtheiten erhalten.

Anwendungsbeispiel 6

Verfährt man in einer der obenbeschriebenen Verfahrensweisen gemäss der vorliegenden Erfindung zum Färben und Bedrucken von Wolle oder von synthetischen Polyamidmaterialien oder von Cellulosefasermaterialien, beispielsweise analog den obigen Anwendungsbeispielen 1 bis 5, und setzt hierfür als Farbstoff erfindungsgemäss eine der in den anderen vorherigen Ausführungsbeispielen oder Tabellenbeispielen beschriebenen erfindungsgemässen Dioxazinfarbstoffe ein, so erhält man ebenfalls kräftige blaue Färbungen und Drucke mit guten Echtheiten.

**Patentansprüche**

1. Triphendioxazin-Verbindung entsprechend der allgemeinen Formel (1)

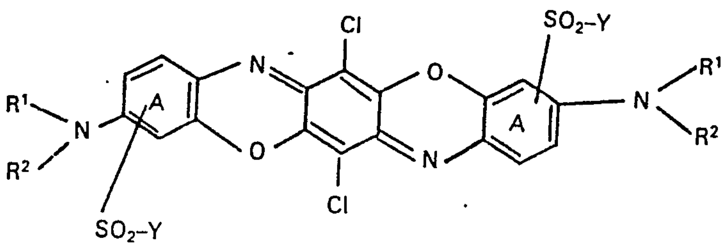

(1)

in welcher bedeuten:

$R^1$ ist ein Wasserstoffatom oder eine Alkylgruppe von 1 bis 8 C-Atomen, die – ausgenommen durch die Hydroxygruppe – substituiert sein kann, oder ist eine Cycloalkylgruppe von 5 bis 8 C-Atomen mit gegebenenfalls 1 bis 3 Methylgruppen und/oder einer Aminogruppe, Alkanoylaminogruppe von 2 bis 5 C-Atomen oder Benzoylaminogruppe als Substituenten oder ist der Phenylrest, der durch 1, 2 oder 3 Substituenten aus der Gruppe Sulfo, Carboxy, Halogen, Alkyl von 1 bis 4 C-Atomen, Alkoxy von 1 bis 4 C-Atomen, Nitro, eine Gruppe der Formel $-SO_2-Y'$ mit Y' der nachstehend angegebenen Bedeutung, Alkylamino mit einem Alkylrest von 1 bis 4 C-Atomen, Dialkylamino mit Alkylresten von jeweils 1 bis 4 C-Atomen, Alkanoylamino von 2 bis 5 C-Atomen und Benzoylamino substituiert sein kann, oder ist ein Naphthylrest, der durch 1, 2 oder 3 Sulfogruppen und/oder eine Gruppe der Formel $-SO_2-Y'$ substituiert sein kann,

$R^2$ besitzt eine der für $R^1$ angegebenen Bedeutungen, wobei $R^2$ zu $R^1$ gleich oder von $R^1$ verschieden ist, oder

$R^1$ und $R^2$ bilden zusammen mit dem Stickstoffatom und einem, zwei oder drei Alkylenresten von 1 bis 5 C-Atomen und gegebenenfalls einem oder zwei weiteren Heteroatomen, einen 5- bis 8gliedrigen heterocyclischen Rest,

wobei die beiden Gruppen $-NR^1R^2$ zueinander gleiche oder voneinander verschiedene Bedeutungen besitzen können;

die beiden Benzolkerne A können durch 1 oder 2 Substituenten aus der Gruppe Alkyl von 1 bis 6 C-Atomen, Alkoxy von 1 bis 5 C-Atomen, Halogen, Carboxy und Sulfo substituiert sein,

wobei die Substitution in beiden Benzolkernen A zueinander gleich oder voneinander verschieden sein kann;

die Gruppen $-SO_2-Y$ können voneinander verschiedene oder bevorzugt zueinander gleiche Bedeutungen besitzen;

Y ist die Vinylgruppe oder eine Ethylgruppe, die in β-Stellung einen durch ein Alkali eliminierbaren Substituenten enthält, insbesondere eine β-Sulfatoethyl-Gruppe;

Y' ist die Vinylgruppe oder eine in β-Stellung durch einen durch Alkali eliminierbaren Substituenten substituierte Ethylgruppe;

von den Sulfo- und Sulfatogruppen, die im Molekül (1) enthalten sein können, enthält das Molekül (1) zwingend mindestens eine, bevorzugt mindestens zwei davon;

ausgenommen hiervon Triphendioxazin-Verbindungen entsprechend der allgemeinen Formel (A)

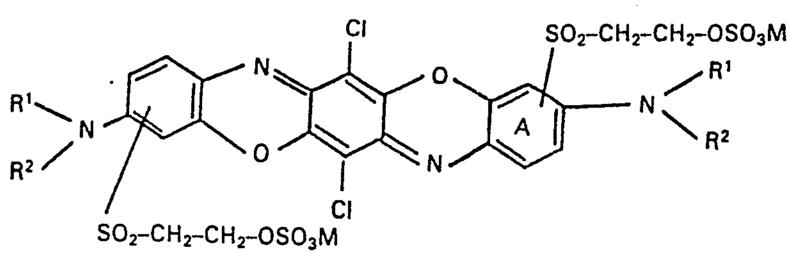

(A)

in welcher beide $R^2$ β-Sulfo-ethyl, δ-Sulfo-butyl, 3,5-Disulfophenyl, 3,5-Disulfo-4-amino-phenyl, β-(3-Sulfo-phenoxy)-ethyl, β-(4-Sulfo-phenyl-amino)-ethyl, β-(Sulfoacetyl-amino)-ethyl, β-(2-Nitro-4-sulfo-phenyl-amino)-ethyl, 4-Sulfo-phenethyl, Sulfobenzyl, β-(N-Sulfoamino)-ethyl, Carboxymethyl, eine Gruppe der Formel $-(CH_2)_4-SO_2-NH-SO_2-CH_3$, β-Sulfato-ethyl, γ-Sulfato-propyl, γ-Sulfato-butyl, β-Sulfato-propyl, δ-Sulfato-butyl,β-(β'-Sulfato-ethoxy)-ethyl,β-(β'-Sulfatoethylsulfonyl)-ethyl, β-(β'-Sulfatoethylamino)-ethyl, β-Sulfato-α, α-dimethyl-ethyl, β, γ-Disulfato-propyl, α,α-Di-(sulfatomethyl)-ethyl oder ω-Sulfato-hexyl bedeuten, falls $R^1$ für ein Wasserstoffatom steht, und beide $R^2$ β-Sulfo-ethyl, β-Sulfato-ethyl oder γ-Sulfato-propyl sind, falls $R^1$ für die Methylgruppe steht, und M ein Wasserstoffatom oder ein Alkalimetall bedeutet.

2. Verbindung nach Anspruch 1, dadurch gekennzeichnet, dass die Gruppen $-SO_2-Y$ in ortho-Stellung zur jeweiligen Aminogruppe $-NR^1R^2$ gebunden sind.

3. Verbindung nach Anspruch 1 oder 2, dadurch gekennzeichnet, dass $R^1$ und $R^2$, gleich oder verschieden, jeweils eine Alkylgruppe von 1 bis 6 C-Atomen ist, die unsubstituiert oder durch einen oder zwei Substituenten substituiert ist, die der Gruppe Halogen, Sulfato, Phosphato, Sulfo, Carboxy, Carbalkoxy von 2 bis 5 C-Atomen, Alkanoylamino von 2 bis 5 C-Atomen, Alkylamino mit 1 bis 4 C-Atomen im Alkylrest, Dialkylamino mit 1 bis 4 C-Atomen in den Alkylresten, ein in den Alkylresten durch eine Sulfo-, Carboxy-, Sulfato- oder Phosphatgruppe oder eine Alkoxygruppe von 1 bis 4 C-Atomen oder eine β-Sulfatoethoxy- oder β-Sulfato-di-, -tri- oder -tetraglykolether-Gruppe substituiertes Alkylamino oder Dialkylamino mit jeweils 1 bis 4 C-Atomen in den Alkylresten des Mono- bzw. Dialkylamins, eine Gruppe der Formel $-SO_2-Y'$ mit Y' der oben angegebenen Bedeutung, Phenyl und durch Alkyl von 1 bis 4 C-Atomen, Alkoxy von 1 bis 4 C-Atomen, Halogen, Nitro, Sulfo, Carboxy, eine Gruppe der Formel $-SO_2-Y'$ mit Y' der oben angegebenen Bedeutung, Amino, Alkylamino mit einem Alkylrest von 1 bis 4 C-Atomen, Alkanoylamino von 2 bis 5 C-Atomen, Benzoylamino, Sulfobenzoylamino und/oder Carbalkoxy von 2 bis 5 C-Atomen substituiertes Phenyl angehören.

4. Verbindung nach mindestens einem der Ansprüche 1 bis 3, dadurch gekennzeichnet, dass die Benzolkerne A durch einen Substituenten aus der in Anspruch 1 angegebenen Gruppe substituiert sind und dass dieser Substituent in meta- oder para-Stellung zur Gruppe $-SO_2-Y$ gebunden ist.

5. Verbindung nach mindestens einem der Ansprüche 1 bis 4, dadurch gekennzeichnet, dass $R^1$ und $R^2$, gleich oder verschieden, jedes ein Wasserstoffatom oder eine Alkylgruppe von 1 bis 4 C-Atomen darstellt, die unsubstituiert oder durch eine Sulfogruppe, eine Carboxygruppe, eine Sulfatogruppe, eine Monosulfophenyl- oder Disulfophenylgruppe substituiert ist.

6. Verbindung nach mindestens einem der Ansprüche 1 bis 4, dadurch gekennzeichnet, dass $R^1$ ein Wasserstoffatom und $R^2$ eine β-(Monosulfophenyl- oder -disulfophenyl)-ethyl- oder -methyl-Gruppe oder eine β-Sulfatopropyl-, eine γ-Sulfato-propyl-, eine β-Sulfatoethyl-, eine β,γ-Disulfato-propyl-, eine β-Sulfato-iso-propyl-, eine α-Sulfatomethyl-propyl-, eine β-(β'-Sulfatoethoxy)-ethyl- oder eine β-Sulfo-ethyl-Gruppe ist.

7. Verbindung nach mindestens einem der Ansprüche 1 bis 5, dadurch gekennzeichnet, dass $R^1$ ein Wasserstoffatom bedeutet.

8. Verbindung nach mindestens einem der Ansprüche 1 bis 7, dadurch gekennzeichnet, dass Y und/oder Y', zueinander gleich oder voneinander verschieden, jedes die Vinylgruppe oder eine β-Sulfatoethyl-, β-Thiosulfatoethyl-, β-Chlorethyl- oder β-Phosphatoethyl-Gruppe bedeutet.

9. Verbindung nach mindestens einem der Ansprüche 1 bis 7, dadurch gekennzeichnet, dass Y und/oder Y' jedes die Vinyl- oder β-Sulfatoethyl-Gruppe bedeutet.

10. Verbindung nach Anspruch 1 der allgemeinen Formel

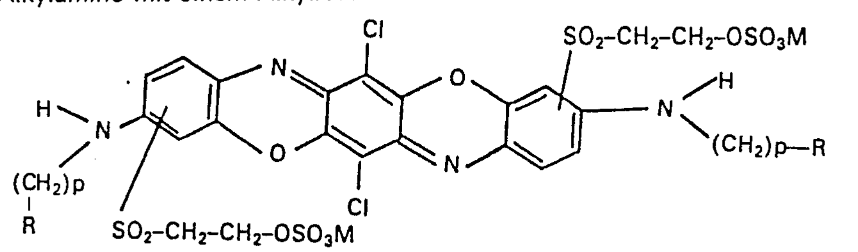

in welcher M ein Wasserstoffatom oder ein Alkalimetall bedeutet, p die Zahl 3 und R eine Sulfogruppe ist.

11. Verbindung nach Anspruch 1 der allgemeinen Formel

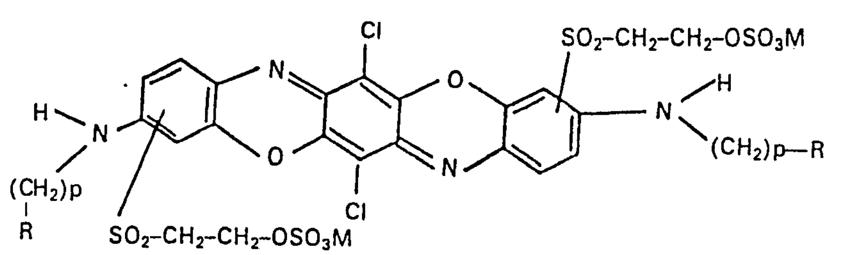

in welcher M ein Wasserstoffatom oder ein Alkalimetall bedeutet und der Formelrest $-(CH_2)_p-R$ die β-Sulfato-α-ethyl-ethyl-, die β-(2,4-Disulfophenyl)-ethyl- oder eine Disulfobenzyl-Gruppe ist.

12. Verbindung nach Anspruch 1 der Formel

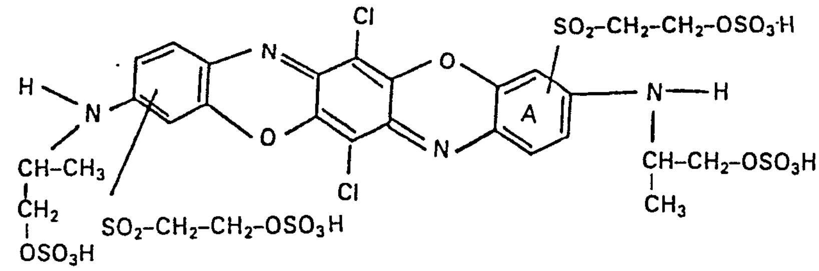

und deren Alkalimetallsalze.

13. Verfahren zur Herstellung der in Anspruch 1 genannten und definierten Verbindungen der allgemeinen Formel (1), dadurch gekennzeichnet, dass man eine Aminoverbindung der allgemeinen Formel (3)

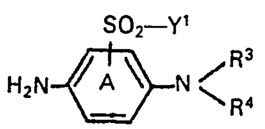

(3)

in welcher $Y^1$ eine der Bedeutungen von Y besitzt oder bevorzugt die β-Hydroxyethyl-Gruppe ist, $R^3$ und $R^4$, zueinander gleich oder voneinander verschieden, eine der Bedeutungen von $R^1$ bzw. $R^2$ haben oder eine durch eine Hydroxygruppe substituierte Alkylgruppe von 1 bis 8 C-Atomen bedeuten, wobei die in $R^3$ und/oder $R^4$ gegebenenfalls befindliche Gruppe Y' in der Gruppe $-SO_2-Y'$ hier auch eine β-Hydroxyethyl-Gruppe sein kann, und A die in Anspruch 1 genannte Bedeutung hat, der Benzolkern A jedoch nicht in einer der ortho-Stellungen zur angegebenen primären Aminogruppe substituiert sein darf, in zweifach molarer Menge mit 2,3,5,6-Tetrachlor-1,4-benzochinon zunächst zu einem Anil-Zwischenprodukt umsetzt und dieses gegebenenfalls nach Zwischenisolierung, in Gegenwart eines Oxidationsmittels und in Schwefelsäure oder Schwefeltrioxid enthaltender Schwefelsäure als Medium zum Triphendioxazin cyclisiert, wobei man vor oder gleichzeitig mit der Cyclisierung gegebenenfalls vorhandene β-Hydroxyethyl-Gruppen und gegebenenfalls vorhandene weitere Hydroxyalkylgruppen in die entsprechenden β-Sulfatoethyl-Gruppen und Sulfatoalkylgruppen überführt.

14. Verfahren zur Herstellung einer Verbindung entsprechend der in Anspruch 1 genannten und definierten allgemeinen Formel (1), in welcher jedoch einer oder beider der Benzolkerne A und/oder einer oder mehrerer der für die Formelreste $R^1$ und $R^2$ bezeichneten Arylreste insgesamt eine oder mehrere Sulfogruppen enthalten, dadurch gekennzeichnet, dass man von einer Ausgangsverbindung der allgemeinen Formel (3) ausgeht, die in den Benzolkernen A und/oder in den Arylresten von $R^3$ und $R^4$ keine oder zusammen weniger Sulfogruppen als das obenbezeichnete Endprodukt enthält, und während oder nach der Cyclisierungsreaktion zum Triphendioxazin eine oder mehrere Sulfogruppen mittels Schwefeltrioxid enthaltender Schwefelsäure bei einer Temperatur von oberhalb 35 °C einführt.

15. Verwendung einer Verbindung von mindestens einem der Ansprüche 1 bis 12 oder einer nach Anspruch 13 oder 14 hergestellten Verbindung der allgemeinen Formel (1) zum Färben (einschliesslich Bedrucken) von hydroxy- und/oder carbonamidgruppenhaltigem Material, insbesondere Fasermaterial.

16. Verfahren zum Färben (einschliesslich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mittels eines säurebindenden Mittels fixiert, dadurch gekennzeichnet, dass man als Farbstoff eine Verbindung von mindestens einem der Ansprüche 1 bis 12 oder einer nach Anspruch 13 oder 14 hergestellten Verbindung der allgemeinen Formel (1) einsetzt.

**Revendications**

1. Composé triphénodioxazinique répondant à la formule générale 1:

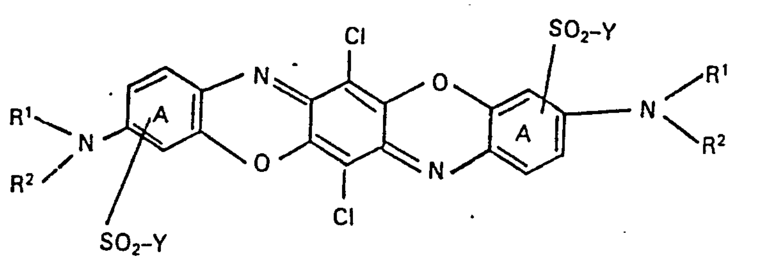

(1)

dans laquelle:

$R^1$ représente:

- un atome d'hydrogène,
- un radical alkyle en $C_1$–$C_8$ qui peut porter des substituants autres que le radical hydroxy,
- un radical cycloalkyle en $C_5$–$C_8$ qui porte éventuellement, comme substituants, de 1 à 3 radicaux méthyles et/ou un radical amino, un radical alcanoylamino en $C_2$–$C_5$ ou un radical benzoylamino,
- un radical phényle qui peut porter un, deux ou trois substituants pris dans l'ensemble constitué par le sulfo, le carboxy, les halogènes, les alkyles en $C_1$–$C_4$, les alcoxy en $C_1$–$C_4$, le nitro, les radicaux $-SO_2-Y'$ dans lesquels Y' a la signification indiquée ci-dessous, les alkylamino dont l'alkyle contient de 1 à 4 atomes de carbone, les dialkylamino dont chacun des alkyles contient de 1 à 4 atomes de carbone, les alcanoylamino en $C_2$–$C_5$ et le benzoylamino, ou
- un radical naphtyle qui peut porter un, deux ou trois radicaux sulfo et/ou un radical $-SO_2-Y'$,

$R^2$ a l'une des significations qui ont été indiquées pour $R^1$, et peut être identique à $R^1$ ou différent de $R^1$, ou

$R^1$ et $R^2$ forment ensemble, avec l'atome d'azote, avec un, deux ou trois radicaux alkylènes en $C_1$–$C_5$ et, éventuellement, avec un ou deux hétéro-atomes supplémentaires, un radical hétérocyclique contenant de 5 à 8 maillons,

les deux radicaux $-NR^1R^2$ peuvent identiques l'un à l'autre ou différents l'un de l'autre,

les deux noyaux benzéniques A peuvent porter un ou deux substituants pris dans l'ensemble constitué par les alkyles en $C_1$–$C_6$, les alcoxy en $C_1$–$C_5$, les halogènes, le carboxy et le sulfo,

les substitutions sur les deux noyaux benzéniques A peuvent être identiques l'une à l'autre ou différentes l'une de l'autre,

les radicaux $-SO_2-Y$ peuvent être différents l'un de l'autre ou, mieux, identiques l'un à l'autre,

Y représente un radical vinyle ou un radical éthyle qui porte, en position β, un substituant éliminable par un composé alcalin, plus particulièrement un radical sulfato-2 éthyle,

Y' représente un radical vinyle ou un radical éthyle qui porte, en position β, un substituant éliminable par un composé alcalin,

parmi les radicaux sulfo et sulfato éventuellement présents dans la molécule (1) il y en a obligatoirement au moins un, de préférence au moins deux, dans la molécule (1),

à l'exception des composés triphénodioxaziniques répondant à la formule générale (A)

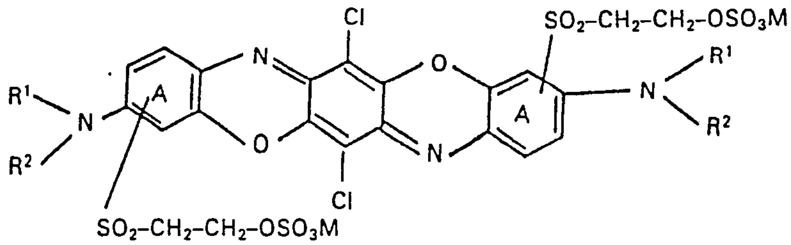

(A)

dans laquelle les deux $R^2$ représentent chacun un radical sulfo-2 éthyle, sulfo-4 butyle, disulfo-3,5 phényle, disulfo-3,5 amino-4 phényle, (sulfo-3 phénoxy)-2 éthyle, (sulfo-4 phénylamino)-2 éthyle, (sulfoacétylamino)-2 éthyle, (nitro-2 sulfo-4 phénylamino)-2 éthyle, (sulfo-4 phényl)-éthyle, sulfobenzyle, (N-sulfo-amino)-2 éthyle, carboxyméthyle, un radical $-(CH_2)_4-SO_2-NH-SO_2-CH_3$, sulfato-2 éthyle, sulfato-3 propyle, sulfato-3 butyle, sulfato-2 propyle, sulfato-4 butyle, (sulfato-2 éthoxy)-2 éthyle, (sulfato-2 éthylsulfonyl)-2 éthyle, (sulfato-2 éthylamino)-2 éthyle, sulfato-2 diméthyl-1,1 éthyle, disulfato-2,3 propyle, bis-(sulfatométhyl)-1,1 éthyle ou ω-sulfato-hexyle dans le cas où $R^1$ désigne un atome d'hydrogène, et les deux $R^2$ représentent chacun un radical sulfo-2 éthyle, sulfato-2 éthyle ou sulfato-3 propyle dans le cas où $R^1$ désigne un radical méthyle, et M représente un atome d'hydrogène ou un métal alcalin.

2. Composé selon la revendication 1 caractérisé en ce que les radicaux $-SO_2-Y$ sont chacun en position ortho par rapport au radical amino-$NR^1R^2$ correspondant.

3. Composé selon l'une des revendications 1 et 2, caractérisé en ce que $R^1$ et $R^2$ sont identiques ou différents l'un de l'autre et représentent chacun un radical alkyle contenant de 1 à 6 atomes de carbone, non substitué ou porteur d'un ou de deux substituants pris dans l'ensemble constitué par les halogènes, le sulfato, le phosphato, le sulfo, le carboxy, les alcoxycarbonyles en $C_2$–$C_5$, les alcanoylamino en $C_2$–$C_5$, les alkylamino dont l'alkyle contient de 1 à 4 atomes de carbone, les dialkylamino dont les alkyles contiennent chacun de 1 à 4 atomes de carbone, les alkylamino et dialkylamino qui contiennent chacun de 1 à 4 atomes de carbone dans les radicaux alkyles de la monoalkylamine ou de la dialkylamine et qui portent, dans les alkyles, un sulfo, un carboxy, un sulfato, un phosphato, un alcoxy en $C_1$–$C_4$, un sulfato-2 éthoxy ou un β-sulfato-bis-, tris- ou tétrakis-(éthylène-oxy), les radicaux $-SO_2-Y'$ dans lesquels Y' a la signification indiquée ci-dessus, le phényle et les phényles qui portent un alkyle en $C_1$–$C_4$, un alcoxy en $C_1$–$C_4$, un halogène, un nitro, un sulfo, un carboxy, un radical $-SO_2-Y'$ dans lequel Y' a la signification indiquée ci-dessus, un amino, un alkylamino dont l'alkyle contient de 1 à 4 atomes de carbone, un alcanoylamino en $C_2$–$C_5$, un benzoylamino, un sulfobenzoylamino et/ou un alcoxycarbonyle en $C_2$–$C_5$.

4. Composé selon au moins une des revendications 1 à 3, caractérisé en ce que les noyaux benzéniques A portent un substituant pris dans l'ensemble indiqué à la revendication 1 et en ce que ce substituant est en position méta ou en position para relativement au radical $-SO_2-Y$.

5. Composé selon au moins une des revendications 1 à 4, caractérisé en ce que $R^1$ et $R^2$ représentent chacun, indépendamment l'un de l'autre, un atome d'hydrogène ou un radical alkyle en $C_1-C_4$, non substitué ou porteur d'un sulfo, d'un carboxy, d'un sulfato, d'un monosulfophényle ou d'un disulfophényle.

6. Composé selon au moins une des revendications 1 à 4, caractérisé en ce que $R^1$ représente un atome d'hydrogène et $R^2$ représente un radical (monosulfophényl- ou disulfophényl)-2 éthyle, un radical (monosulfophényl- ou -disulfophényl)-méthyle ou un radical sulfato-2 propyle, sulfato-3 propyle, sulfato-2 éthyle, disulfato-2,3 propyle, β-sulfato-isopropyle, (sulfatométhyl)-1 propyle, (sulfato-2 éthoxy)-2 éthyle ou sulfo-2 éthyle.

7. Composé selon au moins une des revendications 1à 5, caractérisé en ce que $R^1$ représente un atome d'hydrogène.

8. Composé selon au moins une des revendications 1 à 7, caractérisé en ce que Y et/ou Y', qui peuvent être identiques l'un à l'autre ou différents l'un de l'autre, représentent chacun un radical vinyle ou un radical sulfato-2 éthyle, thiosulfato-2 éthyle, chloro-2 éthyle ou phosphato-2 éthyle.

9. Composé selon au moins une des revendications 1 à 7, caractérisé en ce que Y et/ou Y' représentent chacun un radical vinyle ou sulfato-2 éthyle.

10. Composé selon la revendication 1 qui répond à la formule générale suivante:

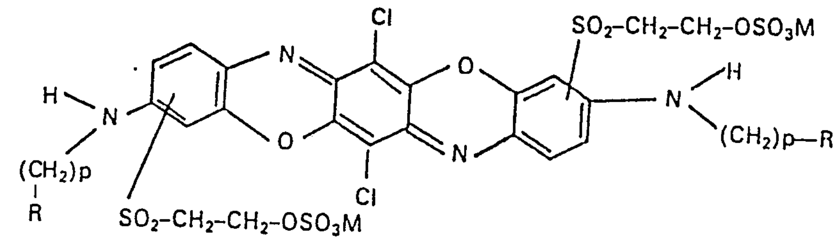

dans laquelle M représente un atome d'hydrogène ou un métal alcalin, p représente le nombre 3 et R représente un radical sulfo.

11. Composé selon la revendication 1 qui répond la formule générale suivante:

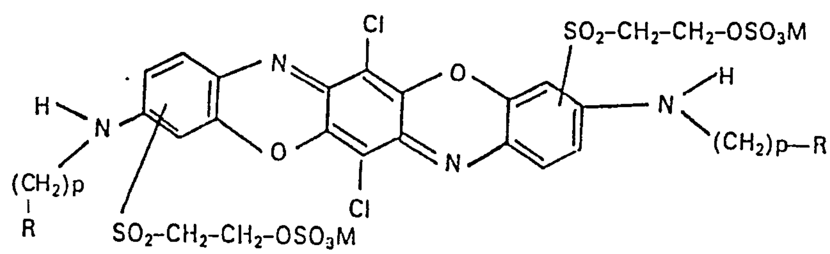

dans laquelle M représente un radical d'hydrogène ou un métal alcalin, et le radical $-(CH_2)_p-R$ représente un radical sulfato-2 éthyl-1 éthyle, (disulfo-2,4 phényl)-2 éthyle ou disulfobenzyle.

12. Composé selon la revendication 1 qui répond à la formule suivante:

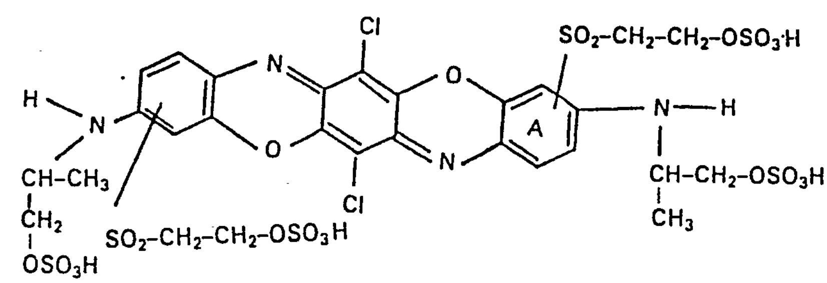

et ses sels de métaux alcalins.

13. Procédé pour préparer les composés de formule générale 1 selon la revendication 1, procédé caractérisé en ce qu'on fait réagir un composé aminé répondant à la formule générale 3:

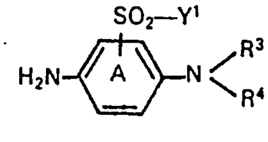

(3)

dans laquelle $Y^1$ a l'une des significations de Y ou, mieux, représente un radical hydroxy-2 éthyle, $R^3$ et $R^4$ sont identiques l'un à l'autre ou différents l'un de l'autre et ont chacun l'une des significations de $R^1$ ou $R^2$ ou représentent chacun un alkyle en $C_1$–$C_8$ porteur d'un hydroxy, le symbole Y' du radical $-SO_2-Y'$, qui se trouve éventuellement dans $R^3$ et/ou $R^4$, pouvant représenter, ici aussi, un radical hydroxy-2 éthyle, et A a la signification qui lui a été donnée à la revendication 1 avec la condition toutefois que le noyau benzénique A ne doit pas porter de substituant en une des positions ortho par rapport au radical amino primaire représenté, en une quantité double de la quantité molaire, avec la tétrachloro-2,3,5,6 benzoquinone-1,4 pour obtenir d'abord un anile intermédiaire, on cyclise celui-ci, éventuellement après l'avoir isolé intermédiairement, en présence d'un agent d'oxydation et dans un milieu qui est constitué d'acide sulfurique ou d'acide sulfurique contenant du trioxyde de soufre, de manière à obtenir la triphénodioxazine, et, avant la cyclisation ou en même temps que la cyclisation, on transforme d'éventuels radicaux hydroxy-2 éthyles et d'éventuels radicaux hydroxy-alkyles supplémentaires en radicaux sulfato-2 éthyle et sulfato-alkyles correspondants.

14. Procédé pour préparer un composé répondant à la formule 1 qui a été représentée et définie à la revendication 1 et dans laquelle un des deux noyaux benzéniques A ou les deux et/ou un ou plusieurs radicaux aryles de $R^1$ et $R^2$ contiennent au total un ou plusieurs radicaux sulfo, procédé caractérisé en ce qu'on part d'un composé de formule générale 3 qui, dans les noyaux benzéniques A et/ou dans les radicaux aryles de $R^3$ et $R^4$, ne contient pas de radicaux sulfo ou, dans l'ensemble, contient moins de radicaux sulfo que le produit final défini ci-dessus, et, pendant ou après la réaction de cyclisation conduisant à la triphénodioxazine, on introduit un ou plusieurs radicaux sulfo au moyen d'acide sulfurique contenant du trioxyde de soufre, à une température supérieure à 35 °C.

15. Application d'un composé selon au moins une des revendications 1 à 12, ou d'un composé de formule générale 1 qui a été préparé selon l'une des revendications 13 et 14, à la teinture (y compris à l'impression) de matières contenant des radicaux hydroxy et/ou des radicaux carbamoyles, plus particulièrement de matières fibreuses de ce genre.

16. Procédé pour teindre (y compris pour imprimer) des matières contenant des radicaux hydroxy et/ou des radicaux carbamoyles, plus particulièrement des matières fibreuses de ce genre, selon lequel on applique un colorant sur la matière, ou on introduit un colorant dans la matière, et on fixe celui-ci par la chaleur et/ou au moyen d'un accepteur d'acides, procédé caractérisé en ce qu'on utilise, comme colorant, un composé selon au moins une des revendications 1 à 12 ou un composé de formule générale 1 qui a été préparé selon l'une des revendications 13 et 14.

## Claims

1. A triphendioxazine compound corresponding to the formula (1)

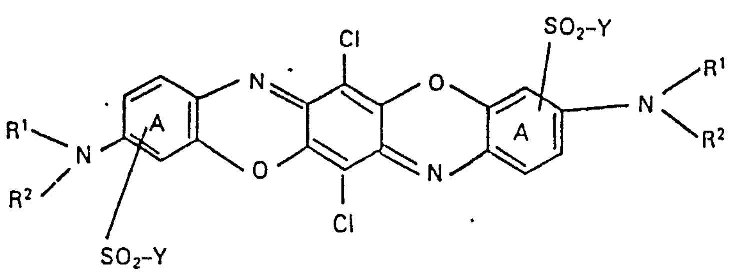

(1)

in which:

$R^1$ is a hydrogen atom or an alkyl group with 1 to 8 carbon atoms, which can be substituted, except for the hydroxyl group, or is a cycloalkyl group with 5 to 8 carbon atoms, with optionally 1 to 3 methyl groups and/or 1 amino group, alkanoylamino group with 2 to 5 carbon atoms or benzoylamino group as substituents, or is the phenyl radical, which can be substituted by 1, 2 or 3 substituents from the group comprising sulfo, carboxyl, halogen, alkyl with 1 to 4 carbon atoms, alkoxy with 1 to 4 carbon atoms, nitro, a group of the formula $-SO_2-Y'$, where Y' has the meaning given below, alkylamino with an alkyl radical with 1 to 4 carbon atoms, dialkylamino with alkyl radicals with in each case 1 to 4 carbon atoms, alkanoylamino with 2 to 5 carbon atoms and benzoylamino, or is a naphthyl radical, which can be substituted by 1, 2 or 3 sulfo groups and/or a group of the formula $-SO_2-Y'$,

$R^2$ has one of the meanings given for $R^1$, $R^2$ being identical to $R^1$ or different from $R^1$ or

$R^1$ and $R^2$, together with the nitrogen atom and one, two or three alkylene radicals with 1 to 5 carbon atoms and if appropriate one or two further hetero-atoms, from a 5-membered to 8-membered heterocyclic radical,

it being possible for the two groups $-NR^1R^2$ to have meanings which are identical to one another or different from one another;

the two benzene nuclei A can be substituted by 1 or 2 substituents from the group comprising alkyl with 1 to 6 carbon atoms, alkoxy with 1 to 5 carbon atoms, halogen, carboxyl and sulfo,

it being possible for the substitutions in the two benzene nuclei A to be identical to one another or different from one another;

the groups $-SO_2-Y$ can have different meanings to one another or, preferably, the same meanings as one another;

Y is the vinyl group or an ethyl group which contains, in the β-position, a substituent which can be eliminated by an alkali, in particular a β-sulfatoethyl group;

Y' is the vinyl group or an ethyl group which is substituted in the β-position by a substituent which can be eliminated by an alkali;

and of the sulfo and sulfato groups which the molecule (1) can contain, the molecule (1) necessarily contains at least one and preferably at least two;

excluding triphendioxazine compounds corresponding to the formula (A)

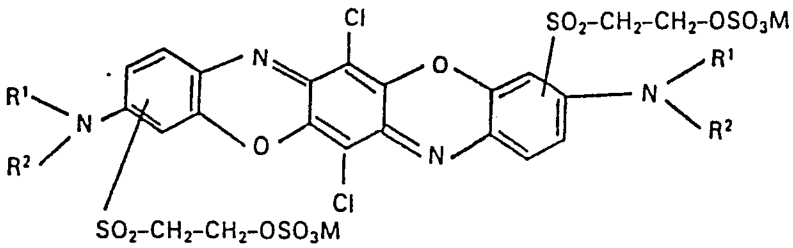

(A)

in which the two radicals $R^2$ denote β-sulfo-ethyl, δ-sulfo-butyl, 3,5-disulfo-phenyl, 3,5-disulfo-4-amino-phenyl, β-(3-sulfo-phenoxy)-ethyl, β-(4-sulfo-phenylamino)-ethyl, β-(sulfoacetylamino)-ethyl, β-(2-nitro-4-sulfo-phenylamino)-ethyl, 4-sulfo-phenethyl, sulfobenzyl, β-(N-sulfoamino)-ethyl, carboxymethyl, a group of the formula $-(CH_2)_4-SO_2-NH-SO_2-CH_3$, β-sulfato-ethyl, γ-sulfato-propyl, γ-sulfato-butyl, β-sulfato-propyl, δ-sulfato-butyl,β-(β'-sulfato-ethoxy)-ethyl,β-(β'-sulfatoethyl-sulfonyl)-ethyl, β-(β'-sulfatoethyl-amino)-ethyl, β-sulfato-α, α-dimethyl-ethyl, β, γ-disulfato-propyl, α, α-di-(sulfatomethyl)-ethyl or ω-sulfato-hexyl, if $R^1$ stands for a hydrogen atom, and the two radicals $R^2$ are β-sulfoethyl, β-sulfato-ethyl or γ-sulfato-propyl, if $R^1$ stands for the methyl group, and M denotes a hydrogen atom or an alkali metal.

2. A compound as claimed in claim 1, in which the groups $-SO_2-Y$ are bonded in the ortho-position relative to the particular amino group $-NR^1R^2$.

3. A compound as claimed in either of claims 1 and 2, in which $R^1$ and $R^2$ are identical or different and is each an alkyl group with 1 to 6 carbon atoms, which is unsubstituted or substituted by one or two substituents belonging to the group comprising halogen, sulfato, phosphato, sulfo, carboxyl, carbalkoxy with 2 to 5 carbon atoms, alkanoylamino with 2 to 5 carbon atoms, alkylamino with 1 to 4 carbon atoms in the alkyl radical, dialkylamino with 1 to 4 carbon atoms in the alkyl radicals, an alkylamino or dialkylamino which has in each case 1 to 4 carbon atoms in the alkyl radicals of the mono- or di-alkylamine and is substituted by a sulfo, carboxyl, sulfato or phosphato group or by an alkoxy group with 1 to 4 carbon atoms or by a β-sulfato-ethoxy or β-sulfato-di-, -tri- or -tetra-glycol ether group, a group of the formula $-SO_2-Y'$, where Y' has the abovementioned meaning, phenyl and phenyl which is substituted by alkyl with 1 to 4 carbon atoms, alkoxy with 1 to 4 carbon atoms, halogen, nitro, sulfo, carboxyl, a group of the formula $-SO_2-Y'$, where Y' has the abovementioned meaning, amino, alkylamino with an alkyl radical of 1 to 4 carbon atoms, alkanoylamino with 2 to 5 carbon atoms, benzoylamino, sulfobenzoylamino and/or carbalkoxy of 2 to 5 carbon atoms.

4. A compound as claimed in any one of claims 1 to 3, in which the benzene nuclei A are substituted by a substituent from the group given in claim 1, and this substituent is bonded in the meta- or para-position relative to the group $-SO_2-Y$.

5. A compound as claimed in any one of claims 1 to 4, in which $R^1$ and $R^2$ are identical or different and each represents a hydrogen atom or an alkyl group with 1 to 4 carbon atoms, which is unsubstituted or substituted by a sulfo group, a carboxyl group, a sulfato group or a monosulfophenyl or disulfophenyl group.

6. A compound as claimed in any one of claims 1 to 4, in which $R^1$ is a hydrogen atom and $R^2$ is a β-(monosulfophenyl- or -disulfophenyl)-ethyl or -methyl group or a β-sulfatopropyl, a γ-sulfatopropyl, a β-sulfatoethyl, a β,γ-disulfatopropyl, a β-sulfato-iso-propyl, a β-sulfatomethyl-propyl, a β-(β'-sulfatoethoxy)-ethyl or a β-sulfo-ethyl group.

7. A compound as claimed in any one of claims 1 to 5, in which $R^1$ denotes a hydrogen atom.

8. A compound as claimed in any one of claims 1 to 7, in which Y and/or Y' are identical to one another or different from one another and each denotes the vinyl group or a β-sulfatoethyl, β-thiosulfatoethyl, β-chloroethyl or β-phosphatoethyl group.

9. A compound as claimed in any one of claims 1 to 7, in which each of Y and/or Y' denotes the vinyl or β-sulfatoethyl group.

10. A compound as claimed in claim 1, of the formula

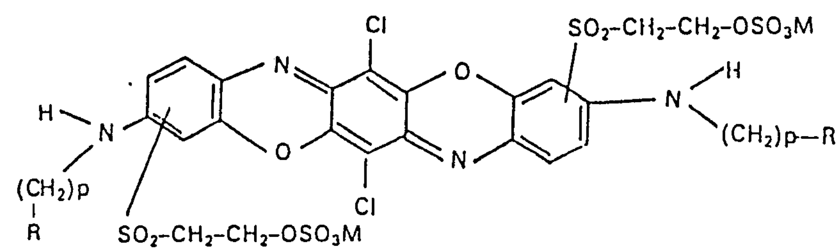

in which M denotes a hydrogen atom or an alkali metal, p is the number 3 and R is a sulfo group.

11. A compound as claimed in claim 1, of the formula

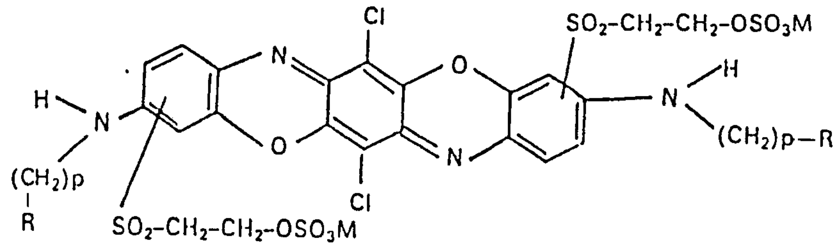

in which M denotes a hydrogen atom or an alkali metal and the formula radical $-(CH_2)_p-R$ is the β-sulfato-α-ethyl-ethyl, the β-(2,4-disulfo-phenyl)-ethyl or a disulfobenzyl group.

12. A compound as claimed in claim 1, of the formula

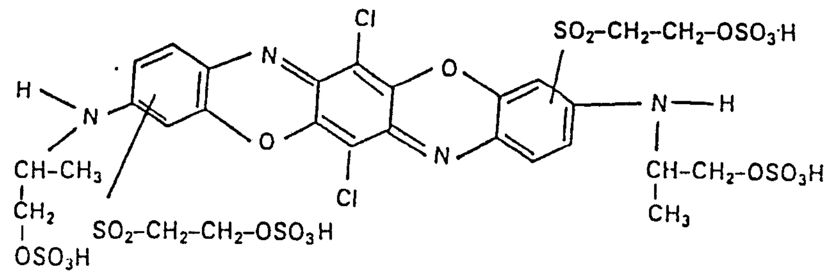

or an alkali metal salt thereof.

13. A process for the preparation of compounds of the formula (1) as mentioned and defined in claim 1, which comprises first reacting an amino compound of the formula (3)

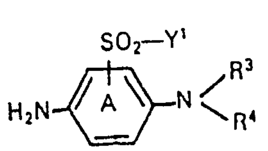
(3)

in which $Y^1$ has one of the meanings of Y or is preferably the β-hydroxyethyl group, $R^3$ and $R^4$ are identical to one another or different from one another and have one of the meanings of $R^1$ or $R^2$ or denote an alkyl group with 1 to 8 carbon atoms which is substituted by a hydroxyl group, it also being possible for the group Y' in the group $-SO_2-Y'$, optionally present in $R^3$ and/or $R^4$, to be a β-hydroxyethyl group, and A has the meaning given in claim 1, but the benzene nucleus A may not be substituted in one of the ortho-positions relative to the primary amino group shown, in twice the molar amount with 2,3,5,6-tetrachloro-1,4-benzoquinone to give an anil intermediate and, if appropriate after intermediate isolation, cyclizing this intermediate in the presence of an oxidizing agent and, as the medium, in sulfuric acid or in sulfuric acid containing sulfur trioxide to give the triphendioxazine, any β-hydroxyethyl groups present and any further hydroxyalkyl groups present being converted into the corresponding β-sulfatoethyl groups and sulfatoalkyl groups before or at the same time as the cyclization.

14. A process for the preparation of a compound corresponding to the formula (1) mentioned and defined in claim 1, but in which one or both of the two benzene nuclei A and/or one or more of the aryl radicals defined for the formula radicals $R^1$ and $R^2$ contain a total of one or more sulfo groups, which comprises using a starting compound of the formula (3) which contains, in the benzene nuclei A and/or in the aryl radicals of $R^3$ and $R^4$, no sulfo groups or, together, fewer sulfo groups than the end product defined above, and introducing one or more sulfo groups by means of sulfuric acid containing sulfur trioxide at a temperature above 35 °C during or after the cyclization reaction to give the triphendioxazine.

15. The use of a compound of any one of claims 1 to 12 or of a compound of the formula (1) prepared as claimed in either of claims 13 and 14 for

dyeing (including printing) material containing hydroxyl and/or carboamide groups, in particular fiber material.

16. A process for dyeing (including printing) material containing hydroxyl and/or carboamide groups, in particular fiber material, in which a dyestuff is applied to the material or introduced into the material and is fixed by means of heat and/or by means of an acid-binding agent, which comprises using a compound of any one of claims 1 to 12 or a compound of the formula (1) prepared as claimed in either of claims 13 and 14.